# EUROPEAN PATENT APPLICATION

(11) **EP 4 663 481 A1**
(43) Date of publication of application: **17.12.2025**
(21) Application number: 24753526.3
(22) Date of filing: 26.01.2024
(51) Int. Cl.: B60Q 3/80, B60Q 3/70, B60R 21/015, B60W 40/08, B60W 50/00

(54) **ELECTRONIC DEVICE FOR CONTROLLING BRIGHTNESS OF INFRARED LIGHTING IN VEHICLE, AND OPERATION METHOD THEREOF**

(30) Priority: 09.02.2023 KR 20230017577; 20.09.2023 KR 20230125856; 08.11.2023 KR 20230153943
(71) Applicant: Samsung Electronics Co., Ltd., Suwon-si, Gyeonggi-do 16677 (KR)
(72) Inventor: JIN, Sungki, Suwon-si, Gyeonggi-do 16677 (KR)
(74) Representative: HGF
(86) International application number: PCT/KR2024/001295
(87) International publication number: WO 2024/167196

(57) **Abstract**

Provided are an electronic device determining whether the occupant is close to infrared lighting of a camera and adjusting the brightness of the infrared lighting based on a result of determining whether the occupant is close to the infrared lighting, and an operation method thereof, in order to prevent a problem of adversely affecting the occupant's eye health due to excessive irradiation of the infrared light to the occupant in a vehicle by the infrared lighting included in the camera in an occupant monitoring system (OMS). Provided are an electronic device adjusting a brightness difference between first row seats and second row seats by a plurality of infrared lightings included in a camera in an OMS, and an operation method thereof.

## Description

### Technical Field

The present disclosure relates to an electronic device for controlling brightness of infrared lighting in a vehicle, and an operation method thereof. Specifically, the present disclosure discloses an electronic device for adjusting the brightness of infrared lighting in a vehicle based on whether an occupant is close to a camera including the infrared lighting in an occupant monitoring system (OMS) including the camera and an operation method thereof.

The present disclosure discloses an electronic device for controlling a plurality of infrared lightings to correct a brightness difference of an image due to locations where the plurality of infrared lightings are disposed in an OMS including the plurality of infrared lightings and an operation method thereof.

### Background Art

The OMS is a system that recognizes not only a driver's face but also an occupant's face and detects activities such as not keeping eyes forward or driving while drowsy to provide warning to a driver. The OMS may perform a function of recognizing a face by photographing a driver or an occupant through a camera installed inside a vehicle, or remotely checking an object inside the vehicle. Recently, the OMS has been legislated for safe driving, and infrared band lighting has been adopted for image analysis without being disturbed by humans. In the OMS, imaging devices (e.g., cameras) are added to monitor not only a driver but also an occupant or rear seat occupants, and the number of lightings installed inside the vehicle has been increasing.

Lighting in the infrared band has the advantage of being invisible to human eyes, but has low atmospheric propagation efficiency and thus requires a high output. In addition, due to the characteristics of short-range active lighting, attenuation ratio for each distance is high, and a brightness difference may be remarkably large even with a small distance difference. For example, a recognizable level of lighting at a distance of 2 meters (m) to 3 m has a high output within a distance of 0.2 m to 0.3 m. In addition, because the infrared band lighting is a band of wavelengths invisible to human eyes, when a problem occurs, the human may not recognize the infrared band lighting, which may act as an anxiety factor for the driver or occupant of the vehicle.

### Disclosure of Invention

### Solution to Problem

An aspect of the present disclosure provides a method of operating an electronic device controlling the brightness of infrared lighting in a vehicle. The method according to an embodiment of the present disclosure may include obtaining a proximity frame according to a preset frame rate between a plurality of image frames obtained according to frames per second through a camera. The method may include determining whether infrared lighting of the camera is close to an occupant in the vehicle based on a pixel intensity value of the obtained proximity frame. The method may include adjusting the brightness of the infrared lighting based on a result of determining whether the infrared lighting is close to the occupant.

Another aspect of the present disclosure provides an electronic device controlling the brightness of lighting based on whether an occupant in a vehicle is close to the lighting. The electronic device according to an embodiment of the present disclosure may include a camera including infrared lighting configured to irradiate infrared light to the occupant in the vehicle and an image sensor configured to obtain an image by receiving light reflected from the occupant, memory storing one or more instructions, and at least one processor configured to execute the one or more instructions. The image sensor may obtain a plurality of image frames according to frames per second, and obtain a proximity frame according to a preset frame rate between times when the plurality of image frames are obtained. The at least one processor may obtain pixel intensity information of the proximity frame, and determine whether the camera is close to the occupant in the vehicle based on the obtained pixel intensity information of the proximity frame. The at least one processor may adjust the brightness of the infrared lighting based on a result of determining whether the camera is close to the occupant.

Another aspect of the present disclosure provides a method of operating an electronic device controlling a plurality of infrared lightings included in a vehicle. The method according to an embodiment of the present disclosure may include applying an on time signal by which the plurality of infrared lightings emit light to the plurality of infrared lightings in synchronization with an exposure time of a camera. The method may include adjusting an on time signal ratio of first row lighting illuminating first row seats among the plurality of infrared lightings to be different from an on time signal ratio of second row lighting illuminating second row seats, based on a brightness difference between the first row seats and the second row seats in the vehicle by the plurality of infrared lightings. The method may include adjusting the brightness of the first row seats by applying the on time signal with the adjusted ratio to the first row lighting.

Another aspect of the present disclosure provides an electronic device controlling the brightness of infrared lighting of a camera included in a vehicle. The electronic device according to an embodiment of the present disclosure may include the camera including a plurality of infrared lightings configured to irradiate infrared light to an occupant in the vehicle and an image sensor configured to obtain an image by receiving light reflected from the occupant, memory storing one or more instructions, and at least one processor configured to execute the one or more instructions. The plurality of infrared lightings may include first row lighting irradiating infrared light to first row seats in the vehicle and second row lighting irradiating the infrared light to second row seats in the vehicle. The at least one processor may apply an on time signal by which the plurality of infrared lightings emit light to the plurality of infrared lightings in synchronization with an exposure time of the image sensor. The at least one processor may adjust an on time signal ratio of the first row lighting to be different from an on time signal ratio of the second row lighting, based on a brightness difference between the first row seats and the second row seats in the vehicle by the plurality of infrared lightings. The at least one processor may adjust the brightness of the first row seats by applying the on time signal with the adjusted ratio to the first row lighting.

### Brief Description of Drawings

The present disclosure may be readily understood with a combination of the following detailed descriptions and the accompanying drawings, wherein reference numbers refer to structural elements.
FIG. 1 is a diagram illustrating an operation of determining whether an occupant is close to a camera by measuring a distance therebetween according to an embodiment of the present disclosure.
FIG. 2 is a flowchart illustrating a method, performed by an electronic device, of controlling the brightness of infrared lighting in a vehicle according to an embodiment of the present disclosure.
FIG. 3 is a timing chart illustrating operations, performed by an electronic device, of obtaining an image frame by controlling an image sensor and controlling the brightness of infrared lighting based on the obtained image frame according to an embodiment of the present disclosure.
FIG. 4 is a block diagram illustrating components of an electronic device according to an embodiment of the present disclosure.
FIG. 5 is a block diagram illustrating components of a camera according to an embodiment of the present disclosure.
FIG. 6 is a flowchart illustrating a method of determining, by an electronic device, whether an infrared light of a camera is close to an occupant in a vehicle according to an embodiment of the present disclosure.
FIG. 7 is a diagram illustrating a plurality of light receiving sensors divided into a plurality of regions according to an embodiment of the present disclosure.
FIG. 8 is a timing chart illustrating an operation, performed by an electronic device, of obtaining an image frame by controlling an image sensor and controlling the brightness of infrared lighting based on the obtained image frame, according to an embodiment of the present disclosure.
FIG. 9 is a timing chart illustrating an operation, performed by an electronic device, of obtaining an image frame by controlling an image sensor and controlling the brightness of infrared lighting based on the obtained image frame, according to an embodiment of the present disclosure.
FIG. 10 is a timing chart illustrating an operation, performed by an electronic device, of obtaining an image frame by controlling an image sensor and controlling the brightness of infrared lighting based on the obtained image frame, according to an embodiment of the present disclosure.
FIG. 11 is a timing chart illustrating an operation, performed by an electronic device, of obtaining an image frame by controlling an image sensor and controlling the brightness of infrared lighting based on the obtained image frame, according to an embodiment of the present disclosure.
FIG. 12A is a cross-sectional view illustrating an arrangement of a plurality of infrared lightings and an image sensor in a vehicle according to an embodiment of the present disclosure.
FIG. 12B is a diagram illustrating an arrangement of a plurality of infrared lightings and an image sensor in a vehicle according to an embodiment of the present disclosure.
FIG. 13 is a flowchart illustrating a method, performed by an electronic device, of controlling a plurality of infrared lightings mounted in a vehicle according to an embodiment of the present disclosure.
FIG. 14 is a timing chart illustrating an operation, performed by an electronic device, of adjusting an on time signal ratio of first row lighting according to an embodiment of the present disclosure.
FIG. 15 is a timing chart illustrating an operation, performed by an electronic device, of adjusting an on time signal ratio of first row lighting according to an embodiment of the present disclosure.
FIG. 16 is a timing chart illustrating an operation, performed by an electronic device, of adjusting an on time signal ratio of first row lighting according to an embodiment of the present disclosure.
FIG. 17 is a diagram illustrating an AND gate for an electronic device to adjust an on time signal ratio of first row lighting according to an embodiment of the present disclosure.
FIG. 18 is a diagram illustrating AND gates for an electronic device to adjust an on time signal ratio of a plurality of infrared lightings according to an embodiment of the present disclosure.
FIG. 19 is a diagram for explaining an operation, performed by an electronic device, of adjusting a brightness difference between seats in a vehicle by controlling the brightness of a plurality of infrared lightings according to an embodiment of the present disclosure.
FIG. 20 is a diagram for explaining an operation performed by an electronic device using artificial intelligence (AI) technology, according to the present disclosure.
FIG. 21 is a diagram illustrating an embodiment in which an electronic device operates in conjunction with a server, according to the present disclosure.
FIG. 22 is a diagram for specifically explaining FIG. 21.

### Mode for the Invention

Although the terms used herein for explaining embodiments of the present specification are selected from among common terms that are currently widely used in consideration of their function in the present disclosure, the terms may be different according to an intention of those of ordinary skill in the art, a precedent, or the advent of new technology. Also, in particular cases, the terms are discretionally selected by the applicant of the present disclosure, in which case, the meaning of those terms will be described in detail in the corresponding embodiment. Therefore, the terms used herein are not merely designations of the terms, but the terms are defined based on the meaning of the terms and content throughout the present disclosure.

The singular expression may also include the plural meaning as long as it is not inconsistent with the context. All the terms used herein, including technical and scientific terms, may have the same meanings as those generally understood by one of skill in the art related to the present specification.

Throughout the present disclosure, when a part "includes" an element, it is to be understood that the part may additionally include other elements rather than excluding other elements as long as there is no particular opposing recitation. In addition, as used herein, the terms such as "...er (or)", "... unit", "... module", etc., denote a unit that performs at least one function or operation, which may be implemented as hardware or software or a combination thereof.

As used herein, the expression "configured to" may be interchangeably used with, for example, "suitable for", "having the capacity to", "designed to", "adapted to", "made to", or "capable of", according to a situation. The expression "configured to" may not imply only "specially designed to" in a hardware manner. Instead, in a certain circumstance, the expression "a system configured to" may indicate the system "capable of" together with another device or components. For example, "a processor configured (or set) to perform A, B, and C" may imply a dedicated processor (e.g., an embedded processor) for performing a corresponding operation or a generic-purpose processor (e.g., central processing unit (CPU) or an application processor) capable of performing corresponding operations by executing one or more software programs stored in memory.

In addition, in the present disclosure, it should be understood that when components are "connected" or "coupled" to each other, the elements may be directly connected or coupled to each other, but may alternatively be connected or coupled to each other with an element therebetween, unless specified otherwise.

In the present disclosure, a 'vehicle' refers to a means of transport that travels on roads or tracks. The 'vehicle' may encompass internal-combustion-engine vehicles equipped with an engine as a power source, hybrid vehicles equipped with an engine and an electric motor as power sources, and battery electric vehicles equipped with an electric motor as a power source and including batteries. In an embodiment of the present disclosure, the vehicle may include at least one of an automobile, a train, or a motorcycle.

In the present disclosure, the 'occupant monitoring system (OMS)' refers to a device that obtains an image by photographing at least one of a driver, a passenger seat occupant, or a rear seat occupant by using a camera, and recognizes an occupant's face from the image by using a pre-trained artificial intelligence (AI) model, or recognizes a behavior (e.g., drowsiness, sleeping, conversation, mobile device manipulation, etc.) of the occupant. In an embodiment of the present disclosure, the OMS may include a camera that photographs an occupant, and the camera may include infrared lighting that irradiates infrared light toward the occupant.

In the present disclosure, the 'infrared lighting' is a device configured to emit light in an infrared band and irradiate infrared light toward the occupant. In an embodiment of the present disclosure, the infrared lighting may be a component included in the camera for the OMS. The band of infrared light may be, for example, 940 nanometers (nm), but is not limited thereto.

In the present disclosure, a 'proximity frame' is an image frame additionally obtained by the camera to determine whether the infrared lighting of the camera for the OMS is close to the occupant in a vehicle. In an embodiment of the present disclosure, the proximity frame may be an image frame additionally obtained according to a preset frame rate between a plurality of image frames obtained by the camera according to frames per second.

In the present disclosure, the 'preset frame rate' represents a rate of the number of a plurality of image frames obtained during a certain time period and one proximity frame.

Hereinafter, embodiments of the present disclosure will be described in detail with reference to the accompanying drawings to allow one of skill in the art to easily carry out the embodiments. The present disclosure may, however, be embodied in many different forms and should not be construed as being limited to an embodiment set forth herein.

Hereinafter, embodiments of the disclosure will be described in detail with reference to the drawings.

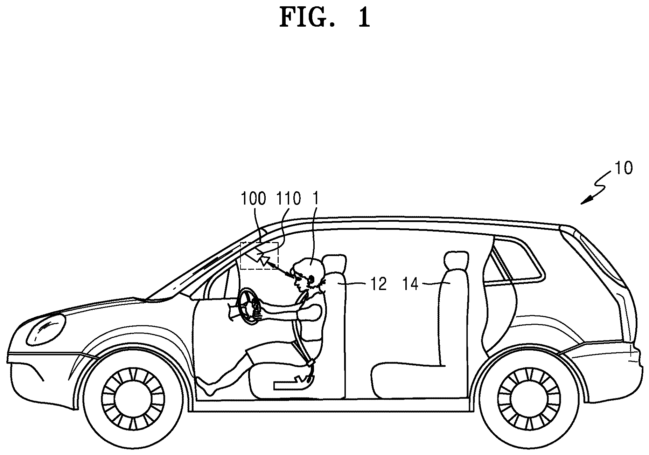

FIG. 1 is a diagram illustrating an operation of determining whether a camera 110 is close to an occupant in a vehicle 10 by measuring a distance therebetween according to an embodiment of the present disclosure.

Referring to FIG. 1, the electronic device 100 may be implemented as an occupant monitoring system (OMS) including a camera 110 and monitors occupants including a driver 1 in the vehicle 10 through the camera 110. In the present disclosure, the 'OMS' refers to a device that obtains an image by photographing at least one of the driver 1, a passenger seat occupant, or a rear seat occupant by using the camera 110, and recognizes an occupant's face from the image by using a pre-trained artificial intelligence (AI) model, or recognizes a behavior (e.g., drowsiness, sleeping, conversation, mobile device manipulation, etc.) of the occupant.

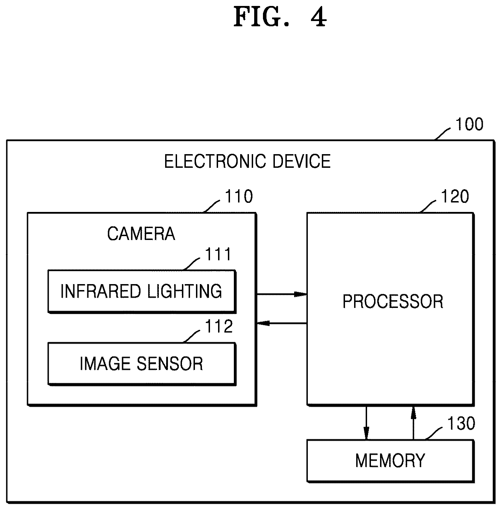

The camera 110 may be mounted in the vehicle 10 and photograph the occupant in the vehicle 10. The camera 110 may include infrared lighting 111 (see FIG. 4) that irradiates light in an infrared band to the occupant in order to photograph the driver 1 in first row seats 12 or the passenger seat occupant. Because the driver 1 requires real-time monitoring, the infrared lighting 111 included in the camera 110 may be always turned on for the driver 1 and continuously irradiate infrared light over time. In an embodiment of the present disclosure, the infrared lighting 111 may also irradiate the infrared light to the passenger seat occupant on the first row seats 12 or an occupant on second row seats 14.

The infrared light irradiated to the occupant by the infrared lighting 111 generally has a band that is invisible to the human eyes, for example, a band of 940 nanometers (nm). When the time for which the infrared light is irradiated to the occupant including the driver 1 increases, damage to the occupant's eyes may occur due to the infrared light. The infrared lighting 111 includes an infrared light source such as a vertical-cavity surface-emission laser (VCSEL) or a light-emitting diode (LED), and there is a growing demand for occupant's eye health. In order to prevent damage to occupant's eyes while operating the OMS, when an occupant approaches lighting of the camera 110 and a distance d between the occupant and the camera 110 is reduced to less than a certain threshold distance, it is necessary to adjust the brightness of the infrared lighting 111 to a low level, such as turning off the active type infrared lighting 111.

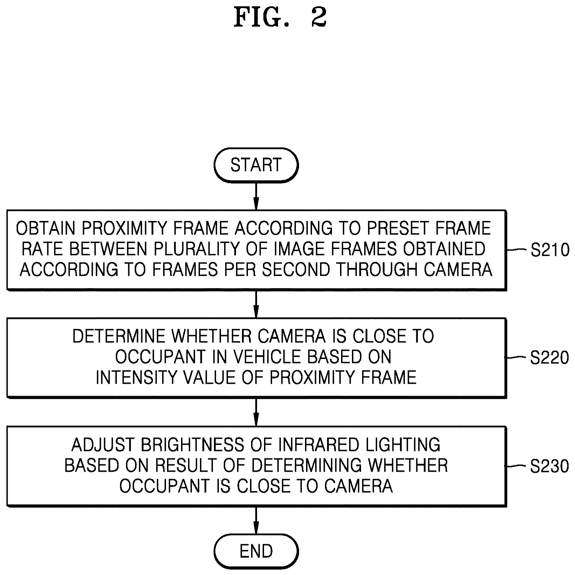

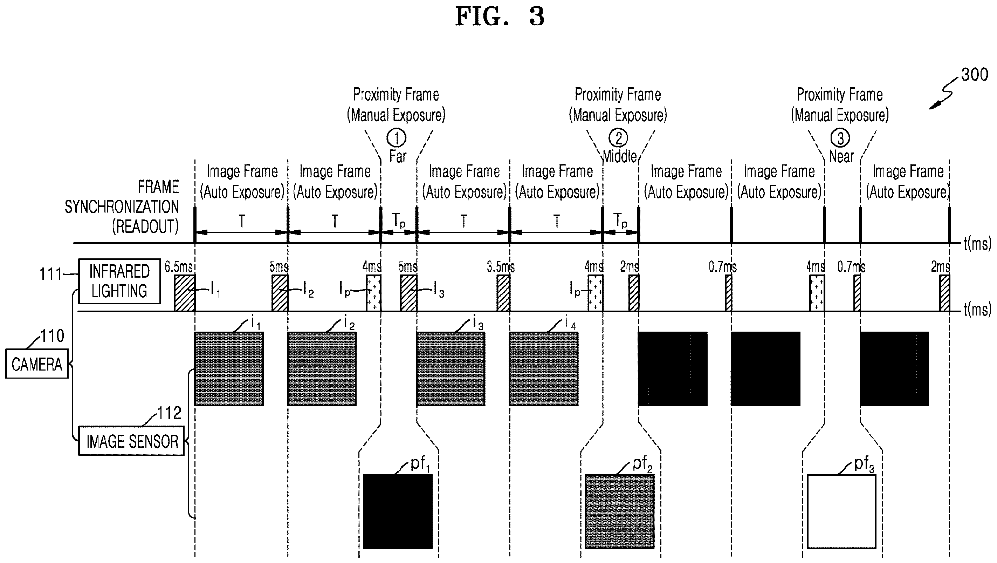

The electronic device 100 of the present disclosure may include the camera 110, determine whether the distance d between the occupant and the camera 110 is close to less than a certain threshold distance by using the camera 110, and adjust the brightness of the infrared lighting 111 to a low level based on a result of determining whether the distance d is close to the threshold distance. A specific function and/or operation, performed by the electronic device 100 of the present disclosure, of determining whether the occupant is close to the camera 110 by less than the threshold distance, and adjusting the brightness of the infrared lighting 111 based on whether the occupant is close to the camera 110 will be described in detail with reference to FIGS. 2 and 3.

FIG. 2 is a flowchart illustrating a method, performed by an electronic device, of controlling the brightness of infrared lighting in a vehicle according to an embodiment of the present disclosure.

FIG. 3 is a timing chart 300 illustrating operations, performed by an electronic device, of obtaining an image frame by controlling an image sensor 112 and controlling the brightness of the infrared lighting 111 based on the obtained image frame according to an embodiment of the present disclosure.

Hereinafter, a function and/or operation, performed by the electronic device 100 (see FIGS. 1 and 4) according to an embodiment of the present disclosure, of adjusting the brightness of the infrared lighting 111 based on whether an occupant is close to the infrared lighting 111 of a camera will be described with reference to FIGS. 2 and 3 together.

In operation S210 of FIG. 2, the electronic device 100 obtains a proximity frame according to a preset frame rate between a plurality of image frames obtained according to frames per second through the camera. In an embodiment of the present disclosure, the camera 110 (see FIGS. 1 and 4) may include the infrared lighting 111 (see FIGS. 3 and 4) and the image sensor 112 (see FIGS. 3 and 4). The electronic device 100 may irradiate infrared light to the occupant in a vehicle by controlling the infrared lighting 111 of the camera 110, and obtain the plurality of image frames by photographing the occupant irradiated with the infrared light by using the image sensor 112. In an embodiment of the present disclosure, the electronic device 100 may obtain the proximity frame according to the preset frame rate between times when the plurality of image frames are obtained. In the present disclosure, the 'proximity frame' refers to an image frame additionally obtained in addition to the plurality of image frames obtained by the camera 110 to determine whether the infrared lighting 111 of the camera 110 is close to the occupant in the vehicle. In an embodiment of the present disclosure, the proximity frame may be an image frame additionally obtained according to the preset frame rate between the plurality of image frames obtained by the camera 110 according to the frames per second.

Referring to the timing chart 300 shown in FIG. 3 together, the electronic device 100 may irradiate the infrared light according to a preset time period T by controlling the infrared lighting 111 included in the camera 110, and obtain a plurality of image frames i₁, i₂, i₃, ... by controlling the image sensor 112 and photographing the occupant irradiated with the infrared light. In an embodiment of the present disclosure, the infrared lighting 111 may irradiate the infrared light by performing an auto exposure and automatically adjusting an exposure time for which the infrared light is irradiated and a gain. For example, the infrared lighting 111 may irradiate a first infrared light I₁ for an exposure time of 6.5 ms, and the image sensor 112 may obtain a first image frame i₁ by photographing an occupant irradiated with the first infrared light I₁. In addition, the infrared lighting 111 may irradiate a second infrared light I₂ for an exposure time of 5 ms, and the image sensor 112 may obtain a second image frame i₂ by photographing an occupant irradiated with the second infrared light I₂. In the timing chart 300, the time period T between a time when the first image frame i₁ is obtained and a time when the second image frame i₂ is obtained may be determined according to the frames per second, and may be, for example, 33 ms. However, the present disclosure is not limited thereto. Through the above-described method, the electronic device 100 may obtain the plurality of image frames i₁, i₂, i₃, ... The exposure times, for example, 6.5 ms, 5 ms, 3.5 ms, 0.7 ms, etc., included in the timing chart 300 are only examples for convenience of explanation, and the exposure times are not limited as shown in FIG. 3.

The electronic device 100 may obtain first to third proximity frames pf₁, pf₂, and pf₃ according to the preset frame rate between times when the plurality of image frames i₁, i₂, i₃, ... are obtained. In an embodiment of the present disclosure, the 'preset frame rate' represents a rate of the number of a plurality of image frames obtained during a certain time period and one proximity frame. Referring to the timing chart 300 of FIG. 3, one first proximity frame pf₁ may be obtained after two image frames including the first image frame i₁ and the second image frame i₂ are obtained. Likewise, after a third image frame i₃ and a fourth image frame i₄ are obtained, one second proximity frame pf₂ may be obtained. In this case, the preset frame rate may represent a rate of one proximity frame per two image frames. The rate of one proximity frame per two image frames is only an example for convenience of explanation, and the 'preset frame rate' of the present disclosure is not limited as shown in FIG. 3.

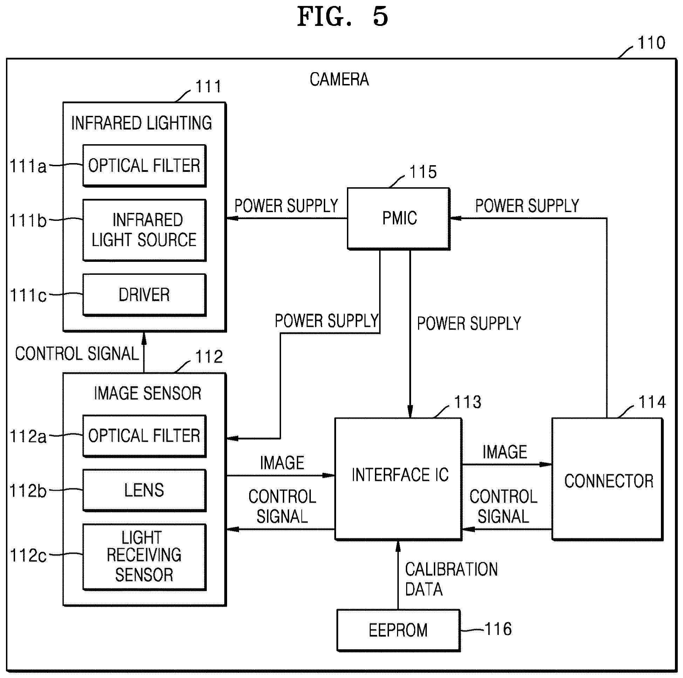

The electronic device 100 may irradiate proximity infrared light Iₚ according to the preset frame rate by controlling the infrared lighting 111, and obtain the first to third proximity frames pf₁, pf₂, and pf₃ by receiving reflected light reflected from the occupant through the image sensor 112. In an embodiment of the present disclosure, the infrared lighting 111 may irradiate the proximity infrared light Iₚ at an exposure time and a gain which are fixed to preset values by performing a manual exposure. Referring to the timing chart 300 shown in FIG. 3, the exposure time of the proximity infrared light Iₚ may be fixed at 4 ms, and the gain may also be fixed. However, this is for convenience of explanation, and the exposure time of the proximity infrared light Iₚ is not limited to 4 ms. Calibration information about the fixed values of the exposure time and the gain of the proximity infrared light Iₚ of the infrared lighting 111 may be previously stored in a nonvolatile memory 116 (see FIG. 5) of the camera 110. The infrared lighting 111 may apply the exposure time and the gain of the proximity infrared light Iₚ by obtaining the previously stored values of the exposure time and the gain from the nonvolatile memory 116. In response to the proximity infrared light Iₚ being irradiated, the image sensor 112 may obtain the first to third proximity frames pf₁, pf₂, and pf₃ by receiving the reflected light reflected from the occupant and converting an analog signal of light into a digital signal through an analog-to-digital converter (ADC).

Because plurality of image frames i₁, i₂, i₃, ... are generally obtained according to hardware specifications, to minimize loss, a time period Tₚ at which the first to third proximity frames pf₁, pf₂, and pf₃ are obtained is relatively short compared to the time period T at which the plurality of image frames i₁, i₂, i₃, ... are obtained.

Referring back to FIG. 2, in operation S220, the electronic device 100 determines whether the infrared lighting of the camera is close to the occupant in the vehicle based on an intensity value of the proximity frame. In an embodiment of the present disclosure, the electronic device 100 may obtain information about the intensity value of the proximity frame based on a signal level of an ADC output obtained by the image sensor 112 (see FIG. 3) of the camera. For example, in a case where the occupant is located far away from the infrared light of the camera, the signal level of the ADC output by the image sensor 112 may be low because of a low amount of light reflected from the occupant. As an opposite example, in a case where the occupant is close to the infrared lighting of the camera, the signal level of the ADC output by the image sensor 112 may be relatively high because of a relatedly large amount of light reflected from the occupant. Using this principle, the electronic device 100 may compare the intensity value of the proximity frame with a preset threshold, and determine that the occupant is in a location close to the infrared lighting in a case where the intensity value of the proximity frame exceeds the threshold as a result of the comparison.

Referring to the timing chart 300 shown in FIG. 3 together, the first proximity frame pf₁ obtained by the image sensor 112 may have a low pixel intensity value. For example, the intensity value of the first proximity frame pf₁ may be a value between 0 and 128. In this case, the electronic device 100 may determine that the occupant is in a location far apart from the infrared light of the camera based on the intensity value of the first proximity frame pf₁. The second proximity frame pf₂ may have about middle pixel intensity value. For example, the intensity value of the second proximity frame pf₂ may be 128. The third proximity frame pf₃ may have a high pixel intensity value. For example, the intensity value of the third proximity frame pf₃ may be saturated between 128 and 256 or 256 or more. In this case, the electronic device 100 may determine that the occupant is in a location close to the infrared lighting of the camera based on the intensity value of the third proximity frame pf₃.

Referring to FIG. 2, in operation S230, the electronic device 100 adjusts the brightness of the infrared lighting based on the result of determining whether the occupant is close to the infrared lighting. In an embodiment of the present disclosure, in a case where the brightness value of the proximity frame exceeds the threshold and it is determined that the occupant is close to the infrared lighting, the electronic device 100 may turn off power applied to the infrared lighting. Accordingly, the electronic device 100 may adjust the amount of infrared light emitted to the occupant to a low level.

In an embodiment of the present disclosure, in a case where it is determined that the occupant is close to the infrared lighting, the electronic device 100 may adjust an on time ratio of the infrared lighting by adjusting a pulse duty for controlling light emission of the infrared lighting through pulse width modulation (PWM). By adjusting the on time ratio of the infrared lighting to a low level, the electronic device 100 may reduce the amount of infrared lighting irradiated to the occupant.

In an embodiment of the present disclosure, in a case where it is determined that the occupant is close to the infrared lighting, the electronic device 100 may adjust the brightness of the infrared lighting by controlling a current value of power applied to the infrared lighting. By controlling the current value of the power applied to the infrared lighting, the electronic device 100 may reduce the amount of infrared lighting irradiated to the occupant.

In an embodiment of the present disclosure, in a case where it is determined that the occupant is close to the infrared lighting, the electronic device 100 may adjust the brightness of the infrared lighting by controlling the exposure time of the infrared lighting. By controlling the exposure time of the infrared lighting, the electronic device 100 may reduce the amount of infrared lighting irradiated to the occupant.

As described with reference to FIG. 1, in an OMS including the camera including the infrared lighting 111 (see FIGS. 3 and 4), when the time for the infrared light to be irradiated to the occupant increases, damage to the occupant's eyes may occur due to the infrared light. In particular, the infrared lighting 111 includes, for example, an infrared light source such as a VCSEL or an LED, and thus, there is a growing demand for the occupant's eye health. Therefore, in order to prevent damage to the occupant's eyes, when the occupant approaches the camera 110, it is necessary to adjust the brightness of the infrared lighting 111 to a low level, such as turning off the active type infrared lighting 111.

The present disclosure provides the electronic device 100 determining whether the occupant is close to the infrared lighting 111 of the camera 110 and adjusting the brightness of the infrared lighting 111 based on the result of determining whether the occupant is close to the infrared lighting 111, and an operation method thereof, in order to prevent a problem of adversely affecting the occupant's eye health due to excessive irradiation of the infrared light to the occupant in the vehicle by the infrared lighting 111 included in the camera 110 in the OMS.

The electronic device 100 according to the embodiment shown in FIGS. 2 and 3 may additionally obtain the first to third proximity frames pf₁, pf₂, and pf₃ according to the preset frame rate between times when the plurality of image frames i₁, i₂, i₃, ... are obtained through the image sensor 112 of the camera 110, determine whether the occupant is close to the infrared lighting 111 of the camera 110 based on the pixel intensity value of the proximity frame, and adjust the brightness of the infrared lighting 111 based on the result of determining whether the occupant is close to the infrared lighting 111. Accordingly, the electronic device 100 of the present disclosure may in advance prevent eye health damage of the occupant in the vehicle due to the irradiation of the infrared light. In addition, the electronic device 100 according to an embodiment of the present disclosure may determine whether the infrared lighting 111 is close to the occupant without the need to additional hardware such as a proximity sensor, thereby providing technical effects of reducing cost and increasing efficiency.

The electronic device 100 according to an embodiment of the present disclosure does not require components such as an additional proximity sensor, which may maintain the hardware design of the existing OMS, thereby improving the utilization of the existing system.

FIG. 4 is a block diagram illustrating components of the electronic device 100 according to an embodiment of the present disclosure.

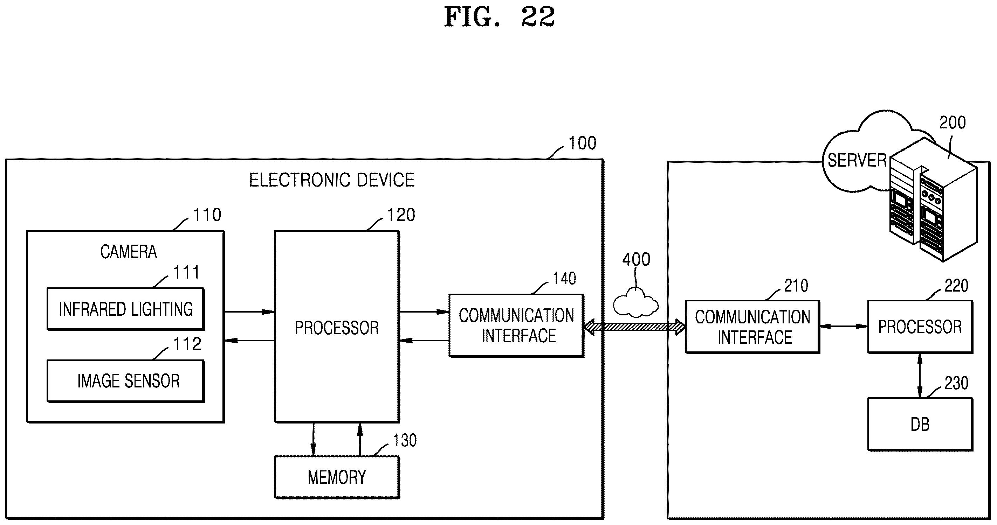

The electronic device 100 may be implemented as an OMS. Referring to FIG. 4, the electronic device 100 may include the camera 110, a processor 120, and memory 130. The camera 110, the processor 120, and the memory 130 may be electrically and/or physically connected to each other. In FIG. 4, only essential components for explaining the operation of the electronic device 100 are illustrated, and components included in the electronic device 100 are not limited as shown in FIG. 4. In an embodiment of the present disclosure, the electronic device 100 may further include a communication interface 140 (see FIG. 23) configured to transmit and receive data to and from a server 200 (see FIGS. 22 and 23) or an external device.

The camera 110 is configured to obtain an image by photographing an occupant such as a driver and/or an occupant in a vehicle. In an embodiment of the present disclosure, the camera 110 may obtain a face image by photographing an occupant's face. The camera 110 may include the infrared lighting 111 and the image sensor 112. However, the camera 110 is not limited thereto and may further include not only the infrared lighting 111 and the image sensor 112 but also an interface circuit 113 (see FIG. 5), a connector 114 (see FIG. 5), a power management integrated circuit (PMIC) 115 (see FIG. 5), and the nonvolatile memory 116 (see FIG. 5). Among the components included in the camera 110, the interface circuit 113, the connector 114, the PMIC 115, and the nonvolatile memory 116 will be described in detail with reference to FIG. 5.

The infrared lighting 111 is configured to emit light in an infrared band and irradiate the light in the infrared band toward the occupant in the vehicle. The infrared lighting 111 may include, for example, a light source including a VCSEL that emits and irradiates infrared light in a point pattern. However, the present disclosure is not limited thereto, and the infrared lighting 111 may include a laser light source or an LED light source.

The infrared ray lighting 111 may operate in synchronization with an exposure time of the image sensor 112. That is, the infrared lighting 111 may emit infrared light by supplying power to the light source during the exposure time of the camera 110 when obtaining an image and irradiate the infrared light. In an embodiment of the present disclosure, the infrared lighting 111 may irradiate the infrared light in a band of 940 nanometers (nm) that is invisible to human eyes. However, the band of light irradiated by the infrared lighting 111 is not limited to 940 nm.

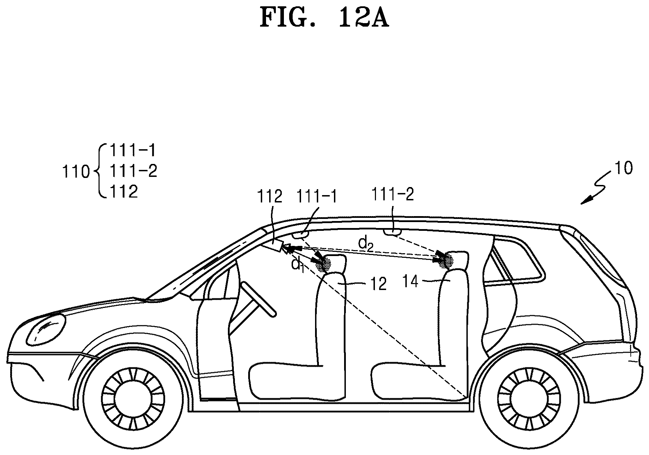

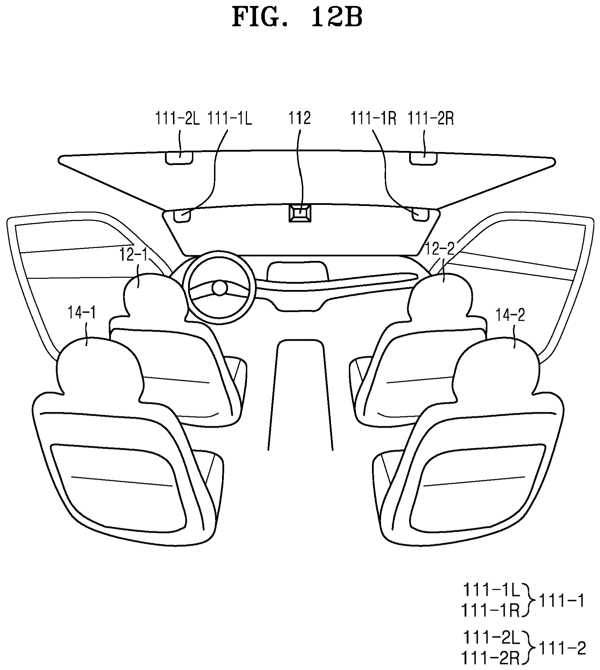

In an embodiment of the present disclosure, the infrared lighting 111 may include a plurality of infrared lightings. For example, the infrared lighting 111 may include first row lighting 111-1 (see FIGS. 12A and 12B) irradiating the infrared light to the first row seats 12 (see FIGS. 12A and 12B) and second row lighting 111-2 (see FIGS. 12A and 12B) irradiating the infrared light to the second row seats 14 (see FIGS. 12A and 12B).

The image sensor 112 is configured to receive reflected light in which the irradiated infrared light is reflected from the occupant and generate an occupant image. In an embodiment of the present disclosure, the image sensor 112 may obtain the occupant image by condensing the reflected light reflected from the occupant through a lens, receiving the reflected light through a light receiving sensor, and converting an analog optical signal into a digital signal through an ADC. The image sensor 112 may be configured with, for example, any one of a complementary metal oxide semiconductor (CMOS), a charge coupled device (CCD), or a charge priming device (CPD).

The infrared lighting 111 may irradiate the infrared light according to a time period determined according to frames per second, and the image sensor 112 may obtain a plurality of image frames by receiving the reflected light in which the infrared light is reflected from the occupant. The infrared lighting 111 may irradiate proximity infrared light according to a preset frame rate, and the image sensor 112 may obtain a proximity frame by receiving the reflected light reflected from the occupant. In an embodiment of the present disclosure, the 'preset frame rate' represents a rate of the number of a plurality of image frames obtained during a certain time period and one proximity frame. Here, the "certain time period" represents one time period during which a preset number of image frames and one proximity frame are obtained. For example, when one proximity frame is obtained after two image frames are obtained, a frame rate may be 2:1.

In an embodiment of the present disclosure, the proximity infrared light may be irradiated in a manual exposure mode, and in this case, each of an exposure time and a gain of the proximity infrared light may be fixed to a preset value. For example, the exposure time of the proximity infrared light may be fixed to 4 ms, but is not limited thereto.

The image sensor 112 may provide, to the processor 120, information about a signal level output by converting the analog optical signal into the digital signal in a process of obtaining the proximity frame.

The processor 120 may execute one or more instructions of a program stored in the memory 130. The processor 120 may include a hardware component that performs arithmetic, logic, and input/output operations and image processing. FIG. 4 illustrates the processor 120 as one element, but the present disclosure is not limited thereto. In an embodiment of the present disclosure, the processor 120 may include one or more elements. The processor 120 may be a general-purpose processor such as a CPU, an application processor (AP), or a digital signal processor (DSP), a dedicated graphics processor such as a graphics processing unit (GPU) or a vision processing unit (VPU), or a dedicated Al processor such as a neural processing unit (NPU). In a case where the processor 120 is a dedicated Al processor, the dedicated Al processor may be designed with a hardware structure specialized for processing a particular Al model.

In an embodiment of the present disclosure, the processor 120 may be implemented as an 8-bit microcontroller (MCU) or a programmable logic device (PLD).

The memory 130 may include, for example, at least one of a flash memory-type storage medium, a hard disk-type storage medium, a multimedia card micro-type storage medium, a card-type memory (e.g., Secure Digital (SD) or eXtreme Digital (XD) memory), random-access memory (RAM), static RAM (SRAM), read-only memory (ROM), electrically erasable programmable ROM (EEPROM), programmable ROM (PROM), a magnetic memory, a magnetic disc, or an optical disc.

The memory 130 may store instructions associated with functions and/or operations performed by the electronic device 100 to control the infrared lighting 111 based on whether the infrared lighting 111 of the camera 110 is close to the occupant. In an embodiment of the present disclosure, the memory 130 may store at least one of instructions, an algorithm, a data structure, program code, or an application program that is readable by the processor 120. The instructions, the algorithm, the data structure, and the program code stored in the memory 130 may be implemented in a programming or scripting language, for example, C, C++, Java, or an assembler.

The processor 120 and the memory 130 may constitute an electronic control unit (ECU) included in the vehicle. Hereinafter, functions or operations, performed by the processor 120, of executing instructions or program code included in modules stored in the memory 130 will be described.

The processor 120 may determine whether the infrared lighting 111 of the camera 110 is close to the occupant in the vehicle based on information about an intensity value of the proximity frame. In an embodiment of the present disclosure, the processor 120 may obtain the information about the intensity value of the proximity frame based on the signal level of the ADC output obtained by the image sensor 112 of the camera 110. The processor 120 may compare the intensity value of the proximity frame with a preset threshold, and determine that the occupant is in a location close to the infrared lighting 111 in a case where the intensity value of the proximity frame exceeds the threshold as a result of the comparison.

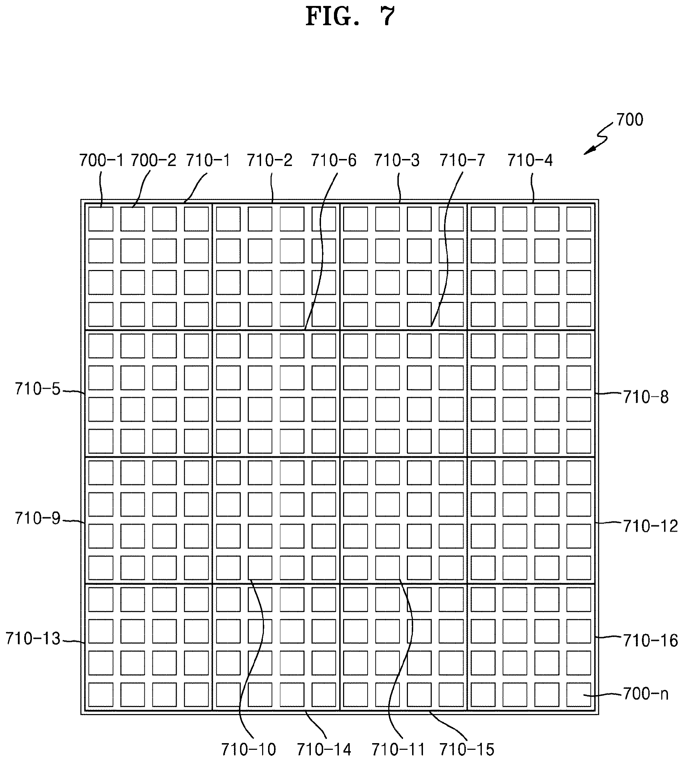

In an embodiment of the present disclosure, the image sensor 112 includes a plurality of light receiving sensors, and the plurality of light receiving sensors may be divided into a plurality of regions according to locations. The plurality of light receiving sensors may obtain the proximity frame by receiving the reflected light in which the infrared light is reflected from the occupant. In this case, the processor 120 may obtain the intensity value information of the proximity frame for each region and determine whether the occupant is close to the infrared lighting 111 of the camera 110 by applying a weight value allocated to each region to the intensity value information for each region. A specific embodiment in which the plurality of light receiving sensors included in the image sensor 112 are divided into the plurality of regions, and it is determined whether the occupant is close to the infrared lighting 111 by applying the weight value for each region will be described in detail with reference to FIG. 7.

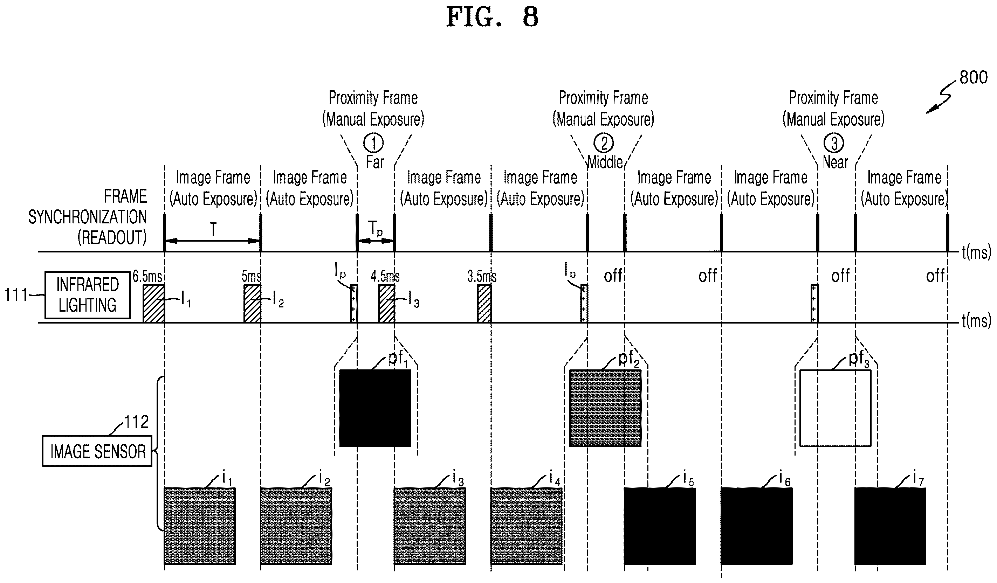

In a case where it is determined that the occupant is in a location close to the infrared lighting 111 of the camera 110, the processor 120 may adjust the brightness of the infrared lighting to a low level. In an embodiment of the present disclosure, in a case where the intensity value of the proximity frame exceeds the threshold and it is determined that the occupant is close to the camera, the processor 120 may turn off the power applied to the infrared lighting 111. An embodiment in which the processor 120 reduces an amount of infrared light irradiated to the occupant by turning off the power of the infrared lighting 111 will be described in detail with reference to a timing chart 800 shown in FIG. 8.

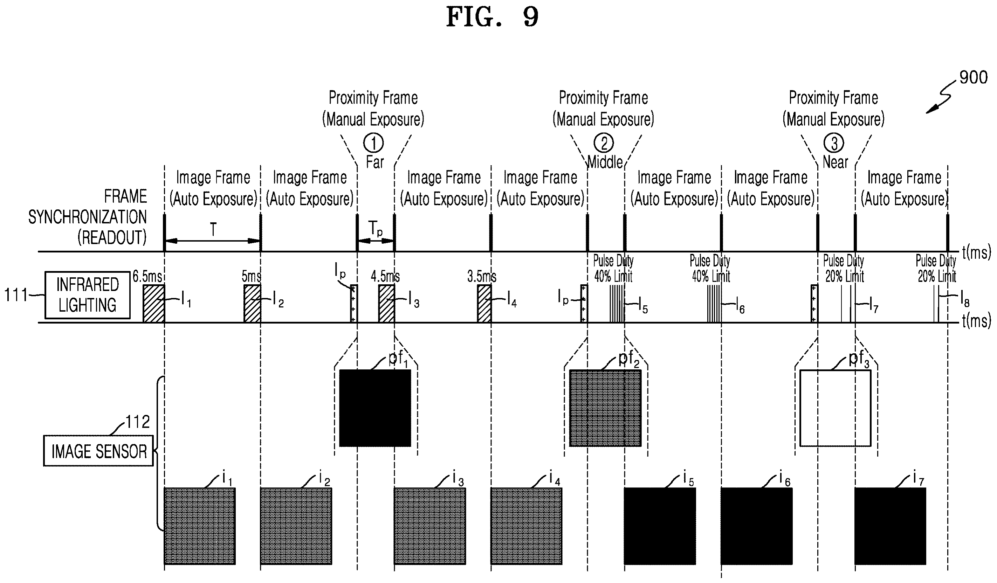

In an embodiment of the present disclosure, in a case where it is determined that the occupant is close to the infrared lighting 111, the processor 120 may adjust an on time ratio of the infrared lighting 111 by adjusting a pulse duty for controlling light emission of the infrared lighting 111 through PWM. An embodiment in which the processor 120 reduces an amount of infrared light irradiated to the occupant by adjusting the on time ratio of the infrared lighting 111 to a low level will be described in detail with reference to a timing chart 900 shown in FIG. 9.

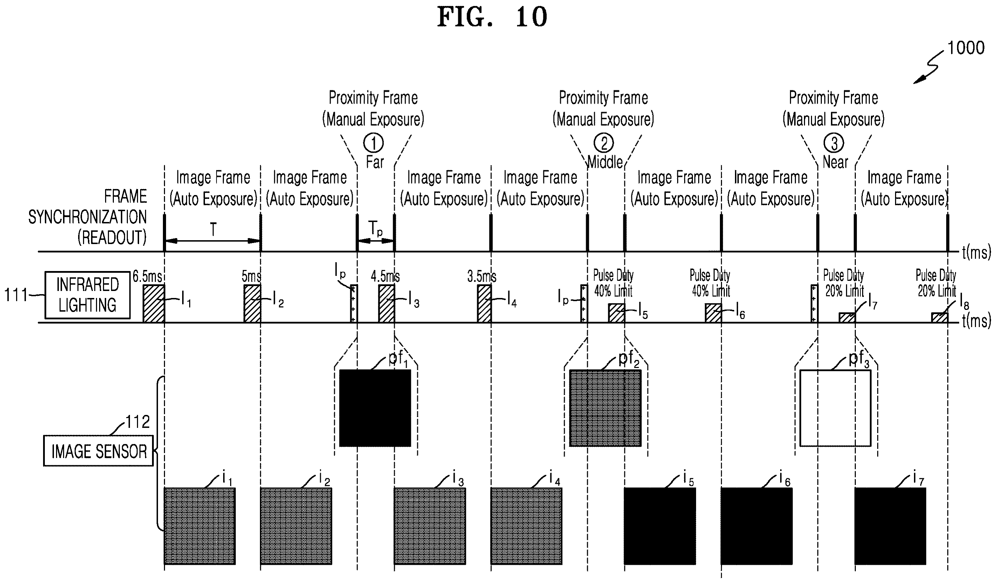

In an embodiment of the present disclosure, in a case where it is determined that the occupant is close to the infrared lighting 111, the processor 120 may adjust the brightness of the infrared lighting 111 by controlling a current value of the power applied to the infrared lighting 111. An embodiment in which the processor 120 reduces an amount of infrared light irradiated to the occupant by controlling the current value of the power applied to the infrared lighting 111 will be described in detail with reference to a timing chart 1000 shown in FIG. 10.

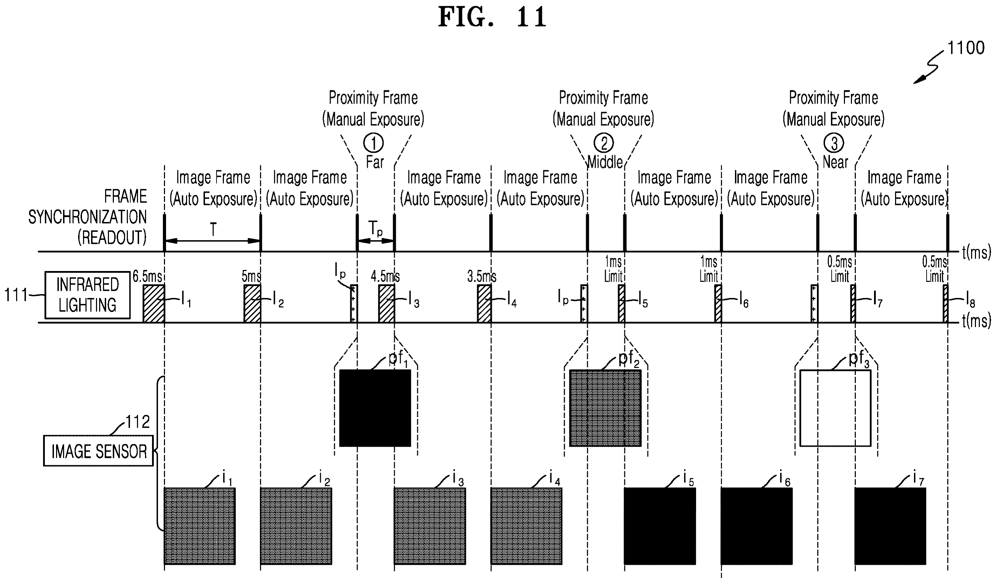

In an embodiment of the present disclosure, in a case where it is determined that the occupant is close to the infrared lighting 111, the processor 120 may adjust the brightness of the infrared lighting 111 by controlling a light emission time of the infrared lighting 111. An embodiment in which the processor 120 reduces an amount of infrared light irradiated to the occupant by controlling the light emission time of the infrared lighting 111 will be described in detail with reference to a timing chart 1100 shown in FIG. 11.

FIG. 5 is a block diagram illustrating components of the camera 110 according to an embodiment of the present disclosure.

Referring to FIG. 5, the camera 110 may include the infrared lighting 111, the image sensor 112, the interface circuit 113, the connector 114, the PMIC 115, and the nonvolatile memory 116. The infrared lighting 111, the image sensor 112, the interface circuit 113, the connector 114, the PMIC 115, and the nonvolatile memory 116 included in the camera 110 may be electrically and/or physically connected to each other.

The infrared lighting 111 is configured to emit light in an infrared band and irradiate the light in the infrared band toward the occupant in the vehicle. In an embodiment of the present disclosure, the infrared lighting 111 may include an optical filter 111a, an infrared light source 111b, and a driver 111c.

The optical filter 111a may be configured as an optical element that filters a wavelength band of light so as to emit the light in the infrared band. In an embodiment of the present disclosure, the optical filter 111a may further include an optical element that changes a path of light having linearity.

The infrared light source 111b is configured to generate the light in the infrared band and emit the light through a collimating lens. In an embodiment of the present disclosure, the infrared light source 111b may irradiate infrared light in a band of 940 nm that is invisible to human eyes. However, the band of light irradiated by the infrared light source 111b is not limited to 940 nm. The infrared light source 111b may be configured as, for example, a VCSEL that generates and emits point pattern light. However, the present disclosure is not limited thereto, and the infrared light source 111b may be configured as an LED light source or a laser light source.

The driver 111c is configured as an integrated circuit configured to control irradiation timing and exposure time at which infrared light is irradiated by the infrared light source 111b.

The image sensor 112 is configured to receive reflected light in which the infrared light irradiated by the infrared lighting 111 is reflected from the occupant and generate an occupant image. The image sensor 112 may control the light irradiation timing and the exposure time of the infrared lighting 111 by receiving a control signal from the interface circuit 113 and transmitting the control signal to the infrared lighting 111.

The image sensor 112 may include an optical filter 112a, a lens 112b, and a light receiving sensor 112c.

The optical filter 112a may be configured as an optical element that filters a wavelength band of light so as to receive light in a specific infrared band. In an embodiment of the present disclosure, the optical filter 112a may include an optical element that condenses light by changing a path of the light so that the reflected light may be received through the lens 112b.

The lens 112b is an optical element that allows the reflected light reflected by the occupant to travel straight in parallel without being dispersed according to the directivity of the light so that an image may be formed on the image sensor 112. The lens 112b is a well-known hardware configuration, and thus a detailed description thereof will be omitted.

The light receiving sensor 112c is configured to obtain an analog optical signal by receiving the reflected light condensed through the lens 112b, and to obtain the occupant image by converting the analog optical signal into a digital signal through an ADC. The light receiving sensor 112c may include, for example, a plurality of photodiodes. The plurality of photodiodes may be disposed to form an array in the form of an n×m matrix. In an embodiment of the present disclosure, the light receiving sensor 112c may include a plurality of single-photon avalanche diodes (SPADs), but is not limited thereto.

The interface circuit 113 is configured as an integrated circuit that obtains a plurality of image frames from the image sensor 112 through a parallel pipeline, converts the obtained plurality of image frames in a serial transmission method, and transmits the plurality of image frames to the connector 114. The interface circuit 113 may receive a control signal from the processor 120 (see FIG. 4) or an ECU through the connector 114 and transmit the received control signal to the image sensor 112 to control the image sensor 112.

The connector 114 is a hardware device that connects the camera 110 to the processor 120 or the ECU in a vehicle. The connector 114 may receive a control signal from the processor 120 or the ECU and transmit the control signal to the interface circuit 113. The connector 114 may obtain an image frame from the interface circuit 113 and transmit the obtained image frame to the processor 120 or the ECU.

The PMIC 115 is configured as an integrated circuit that receives power from the connector 114 and provides driving power to the infrared lighting 111, the image sensor 112, and the interface circuit 113.

The nonvolatile memory 116 is memory that stores calibration data determined based on optical characteristics of the optical filter 112a and the lens 112b. The nonvolatile memory 116 means a storage medium that stores and maintains information even when power is not supplied, and uses the stored information again when power is supplied. In an embodiment of the present disclosure, the nonvolatile memory 116 may be configured as an EPROM. However, the present disclosure is not limited thereto, and the nonvolatile memory 116 may be configured as, for example, flash memory, hard disk, solid state drive (SSD), multimedia card micro type, card type external memory (e.g., SD or XD memory), or optical disk.

The nonvolatile memory 116 may store information about a threshold that is a reference for determining whether the occupant is close to the infrared lighting 111 according to a signal level of an ADC output that is output by the image sensor 112. In an embodiment of the present disclosure, the interface circuit 113 may obtain threshold information from the nonvolatile memory 116 and determine whether the occupant is close to the infrared lighting 111 by comparing the signal level of the ADC output that is output by the image sensor 112 with the threshold. In this case, the interface circuit 113 may provide a result of determining whether the occupant is close to the infrared lighting 111 to the processor 120 or the ECU in the vehicle.

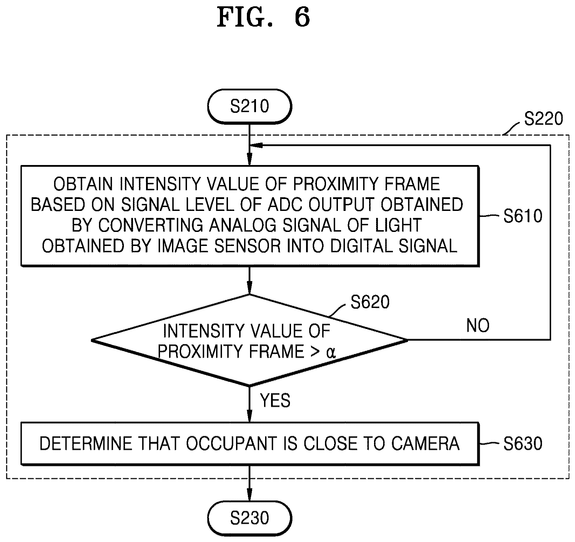

FIG. 6 is a flowchart illustrating a method of determining, by the electronic device 100, of whether an infrared light of a camera is close to an occupant in a vehicle according to an embodiment of the present disclosure.

Operations S610 to S630 shown in FIG. 6 are embodies operations of operation S220 of FIG. 2. Operation S610 shown in FIG. 6 may be performed after operation S210 of FIG. 2 is performed. After operation S630 shown in FIG. 6 is performed, operation S230 of FIG. 2 may be performed.

In operation S610, the electronic device 100 obtains an intensity value of a proximity frame based on a signal level of an ADC output obtained by converting an analog signal of light obtained by the image sensor 112 (see FIGS. 4 and 5) into a digital signal. In an embodiment of the present disclosure, when infrared light is irradiated to the occupant by the infrared lighting 111 (see FIGS. 4 and 5), the image sensor 112 may receive, by using the light receiving sensor 112c (see FIG. 5), reflected light reflected by the occupant, obtain the analog signal of the received light, and obtain the proximity frame by converting the analog signal into the digital signal through an ADC. The processor 120 (see FIG. 4) of the electronic device 100 may obtain intensity value information of the proximity frame based on the signal level of the ADC output that is output by the ADC of the image sensor 112.

In operation S620, the electronic device 100 compares the intensity value of the proximity frame with a preset threshold α. The 'preset threshold α' may be an intensity value of a pixel previously set to determine whether the occupant is close to the camera. In an embodiment of the present disclosure, the threshold α may be preset by a user. The processor 120 (see FIG. 4) of the electronic device 100 may obtain information about the threshold α by loading the nonvolatile memory 116 (see FIG. 5) of the camera 110 (see FIGS. 4 and 5).

In a case where the intensity value of the proximity frame exceeds the preset threshold α (operation S630), the electronic device 100 determines that the occupant is close to the infrared lighting of the camera.

In a case where the intensity value of the proximity frame is less than or equal to the preset threshold α, the electronic device 100 performs operation S610 again to obtain an intensity value of the proximity frame obtained at a next time.

FIG. 7 is a diagram illustrating a plurality of light receiving sensors 700-1 to 700-n divided into a plurality of regions 710-1 to 710-16 according to an embodiment of the present disclosure.

Referring to FIG. 7, an image sensor 700 may include the plurality of light receiving sensors 700-1 to 700-n. The plurality of light receiving sensors 700-1 to 700-n may include, for example, a plurality of photodiodes. The plurality of photodiodes may be disposed to form an array in the form of an n×m matrix. In the embodiment of FIG. 7, the plurality of photodiodes are illustrated as the array in the form of a 16×16 matrix, but this is for convenience of explanation, and the number of the plurality of light receiving sensors 700-1 to 700-n of the present disclosure is not limited as shown in FIG. 7. In an embodiment of the present disclosure, the plurality of light receiving sensors 700-1 to 700-n may be configured as a plurality of SPADs. However, the present disclosure is not limited thereto.

The plurality of light receiving sensors 700-1 to 700-n may be divided into the plurality of regions 710-1 to 710-16 according to locations thereof. In the embodiment of FIG. 7, the plurality of light receiving sensors 700-1 to 700-n are divided into a total of 16 regions, but this is for convenience of explanation, and the light receiving sensors of the present disclosure is not limited to being divided into the 16 regions.

The plurality of light receiving sensors 700-1 to 700-n may obtain analog signals of light by receiving reflected light reflected from the occupant. The analog signals obtained by the plurality of light receiving sensors 700-1 to 700-n may be converted into digital signals by an ADC. The image sensor 700 may obtain an image through additional postprocessing on the converted digital signals. In this case, the plurality of light receiving sensors 700-1 to 700-n may respectively correspond to a plurality of pixels included in the image.

In an embodiment of the present disclosure, the electronic device 100 may apply a weight value according to a location to each of the plurality of regions 710-1 to 710-16 when determining whether the occupant is close to the infrared lighting based on intensity values of the plurality of pixels included in the image. In general, when photographing an image of the occupant through the camera, an occupant's face may be included in a central region of the image obtained through the image sensor 700, and the background or the occupant's chest may be photographed in the remaining region except the central region.

The processor 120 (see FIG. 4) of the electronic device 100 may allocate a weight value for each region to the proximity frame obtained by the image sensor 700 and apply the allocated weight value to an intensity value of a pixel for each region. In an embodiment shown in FIG. 7, the processor 120 may allocate higher weight values to the central regions among the plurality of regions 710-1 to 710-16 of the image sensor 700, for example, a sixth region 710-6, a seventh region 710-7, a tenth region 710-10, and an eleventh region 710-11, than other regions, and apply a high weight value to an intensity value of a pixel in an region of the proximity frame obtained through the image sensor 700 corresponding to the sixth region 710-6, the seventh region 710-7, the tenth region 710-10, and the eleventh region 710-11. The processor 120 may determine whether the infrared lighting of the camera is close to the occupant based on the intensity value of the proximity frame to which the weight value is applied.

When determining whether the infrared lighting of the camera is close to the occupant, it is important to protect the occupant's eyes. When obtaining the proximity frame through the image sensor 700, the electronic device 100 according to the embodiment shown in FIG. 7 may divide the plurality of light receiving sensors 700-1 to 700-n included in the image sensor 700 into the plurality of regions 710-1 to 710-16 according to the locations of the plurality of light receiving sensors 700-1 to 700-n, allocate higher weight values to the central regions where the occupant's face is highly likely to be photographed among the plurality of regions 710-1 to 710-16, for example, the sixth region 710-6, the seventh region 710-7, the tenth region 710-10, and the eleventh region 710-11, than other regions, and apply the weight value to the intensity value for each pixel of the proximity frame, thereby more accurately and efficiently determining whether the occupant is close to the infrared lighting of the camera.

FIG. 8 is the timing chart 800 illustrating an operation, performed by the electronic device 100, of obtaining an image frame by controlling the image sensor 112 and controlling the brightness of the infrared lighting 111 based on the obtained image frame, according to an embodiment of the present disclosure.

Referring to the timing chart 800 shown in FIG. 8, the electronic device 100 may irradiate infrared light according to the preset time period T by controlling the infrared lighting 111 included in the camera 110, and obtain the plurality of image frames i₁, i₂, i₃, ... by controlling the image sensor 112 and photographing an occupant irradiated with the infrared light. In an embodiment of the present disclosure, the infrared lighting 111 may irradiate the infrared light by performing an auto exposure and automatically adjusting an exposure time for which the infrared light is irradiated and a gain. For example, the infrared lighting 111 may irradiate the first infrared light I₁ for an exposure time of 6.5 ms, and the image sensor 112 may obtain the first image frame i₁ by photographing an occupant irradiated with the first infrared light I₁. In addition, the infrared lighting 111 may irradiate the second infrared light I₂ for an exposure time of 5 ms, and the image sensor 112 may obtain the first image frame i₂ by photographing an occupant irradiated with the second infrared light I₂. The exposure times included in the timing chart 800, for example, 6.5 ms, 5 ms, 3.5 ms, 0.7 ms, etc., are only examples for convenience of explanation, and the exposure times are not limited as shown in FIG. 8.

The electronic device 100 may obtain the first to third proximity frames pf₁, pf₂, and pf₃ according to the preset frame rate between times when the plurality of image frames i₁, i₂, i₃, ... are obtained. In an embodiment of the present disclosure, the 'preset frame rate' represents a rate of the number of a plurality of image frames obtained during a certain time period and one proximity frame. Referring to the timing chart 800 of FIG. 8, one first proximity frame pf₁ may be obtained after two image frames including the first image frame i₁ and the second image frame i₂ are obtained. Likewise, after the third image frame i₃ and the fourth image frame i₄ are obtained, one second proximity frame pf₂ may be obtained, and after a fifth image frame is and a sixth image frame i₆ are obtained, one third proximity frame pf₃ may be obtained. In this case, the preset frame rate may represent a rate of one proximity frame per two image frames. The rate of one proximity frame per two image frames is only an example for convenience of explanation, and the 'preset frame rate' of the present disclosure is not limited as shown in FIG. 8.

The electronic device 100 may irradiate the proximity infrared light Iₚ according to the preset frame rate by controlling the infrared lighting 111, and obtain the first to third proximity frames pf₁, pf₂, and pf₃ by receiving reflected light reflected from the occupant through the image sensor 112. In an embodiment of the present disclosure, the infrared lighting 111 may irradiate the proximity infrared light Iₚ at an exposure time and a gain which are fixed to preset values by performing a manual exposure. Referring to the timing chart 800 shown in FIG. 8, the exposure time of the proximity infrared light Ip may be fixed at 4 ms, and a gain may also be fixed. However, this is for convenience of explanation, and the exposure time of the proximity infrared light Iₚ is not limited to 4 ms.

The electronic device 100 may determine whether the infrared lighting 111 close to the occupant based on intensity values of the first to third proximity frames pf₁, pf₂, and pf₃. In an embodiment of the present disclosure, the processor 120 (see FIG. 4) of the electronic device 100 may compare each of the pixel intensity values of the first to third proximity frames pf₁, pf₂, and pf₃ with a preset threshold, and determine that the occupant is close to the infrared lighting 111 in a case where each of the pixel intensity values of the first to third proximity frames pf₁, pf₂, and pf₃ exceeds the threshold as a result of the comparison. In the embodiment shown in FIG. 8, the intensity value of the first proximity frame pf₁ may be lower than the threshold, and the intensity values of the second proximity frame pf₂ and the third proximity frame pf₃ may exceed the threshold. The processor 120 may compare the intensity value of the second proximity frame pf₂ with the threshold, determine that the intensity value of the second proximity frame pf₂ exceeds the threshold as a result of the comparison, and determine that the occupant has moved closely to the infrared lighting 111.

In a case where it is determined that the occupant is in a location close to the infrared lighting 111, the processor 120 of the electronic device 100 may turn off power applied to the infrared lighting 111. In the embodiment shown in FIG. 8, the processor 120 may turn off the power applied to the infrared lighting 111 by control the PMIC 115 (see FIG. 5) of the camera after the second proximity frame pf₂ is obtained. In a case where the power of the infrared lighting 111 is turned off, no infrared light is irradiated, and pixel intensity values of fifth to seventh image frames i₅ to i₇ may be lower than pixel intensity values of the first to fourth image frames i₁ to i₄.

However, even in this case, because the infrared lighting 111 irradiates the proximity infrared light Iₚ through the manual exposure, the infrared lighting 111 may irradiate the proximity infrared light Iₚ at the fixed exposure time and gain, and accordingly obtain the third proximity frame pf₃. In a case where the intensity value of the third proximity frame pf₃ is higher than the intensity value of the second proximity frame pf₂, the processor 120 may determine that the occupant is closer to the infrared lighting 111. In this case, the processor 120 may maintain the power of the infrared lighting 111 in an off state.

FIG. 9 is the timing chart 900 illustrating an operation, performed by the electronic device 100, of obtaining an image frame by controlling the image sensor 112 and controlling the brightness of the infrared lighting 111 based on the obtained image frame, according to an embodiment of the present disclosure.

The timing chart 900 shown in FIG. 9 is the same as the timing chart 800 shown in FIG. 8 except for pulse duties of the fifth to seventh infrared light I₅ to I₈ irradiated to obtain the fifth to seventh image frames i₅ and i₇, and thus the redundant descriptions of the plurality of image frames i₁ to i₇, the first to third proximity frames pf₁, pf₂, and pf₃, a preset frame rate, etc. are omitted.

The electronic device 100 may determine whether the infrared lighting 111 is closed to an occupant based on intensity values of the first to third proximity frames pf₁, pf₂, and pf₃. In an embodiment of the present disclosure, the processor 120 (see FIG. 4) of the electronic device 100 may compare each of the pixel intensity values of the first to third proximity frames pf₁, pf₂, and pf₃ with a preset threshold, and determine that the occupant is close to the infrared lighting 111 in a case where each of the pixel intensity values of the first to third proximity frames pf₁, pf₂, and pf₃ exceeds the threshold as a result of the comparison. Referring to the embodiment shown in FIG. 9, the intensity value of the first proximity frame pf₁ may be lower than the threshold, and the intensity values of the second proximity frame pf₂ and the third proximity frame pf₃ may exceed the threshold. The processor 120 may compare the intensity value of the second proximity frame pf₂ with the threshold, determine that the intensity value of the second proximity frame pf₂ exceeds the threshold as a result of the comparison, and determine that the occupant has moved closely to the infrared lighting 111.

In a case where it is determined that the occupant is in a location close to the infrared lighting 111, the processor 120 of the electronic device 100 may adjust an on time signal ratio of the infrared lighting 111 by adjusting a pulse duty for controlling light emission of the infrared lighting 111 through PWM. In the present disclosure, the 'on-time signal ratio' represents a ratio at which a light source of the infrared lighting 111 emits light during the entire signal period to apply an on-signal to control infrared light to be irradiated to the occupant.

Referring to the timing chart 900 shown in FIG. 9, in a case where it is determined that the intensity value of the second proximity frame pf₂ exceeds the threshold, the processor 120 may control the infrared lighting 111 to apply the fifth infrared light I₅ and the sixth infrared light I₆ at a pulse waveform having an on time signal in a constant pulse width. For example, the processor 120 may perform PWM to apply the fifth infrared light I₅ and the sixth infrared light I₆ at a pulse waveform limiting pulse duties of the fifth infrared light I₅ and the sixth infrared light I₆ to 40 % compared to the first to fourth infrared light I₁ to I₄. In a case where the intensity value of the third proximity frame pf₃ obtained through a manual exposure is greater than the intensity value of the second proximity frame pf₂, the processor 120 may determine that the occupant is closer to the infrared lighting 111. In this case, the processor 120 may perform PWM such that the seventh infrared light I₇ and the eighth infrared light I₈ irradiated after the third proximity frame pf₃ is obtained have an on time signal ratio of 20 % compared to the first to fourth infrared light I₁ to I₄. The intensity value of the seventh image frame i₇ obtained by the image sensor 112 after the seventh infrared light I₇ is irradiated may be lower than the intensity values of the fifth image frame i₅ and the sixth image frame i₆.

FIG. 10 is the timing chart 1000 illustrating an operation, performed by the electronic device 100, of obtaining an image frame by controlling the image sensor 112 and controlling the brightness of the infrared lighting 111 based on the obtained image frame, according to an embodiment of the present disclosure.

The timing chart 1000 shown in FIG. 10 is the same as the timing chart 800 shown in FIG. 8 except that outputs of the fifth to seventh infrared light I₅ to I₈ irradiated to respectively obtain the fifth to seventh image frames is to i₇ are low, and thus the redundant descriptions of the plurality of image frames i₁ to i₇, the first to third proximity frames pf₁, pf₂, and pf₃, a preset frame rate, etc. are omitted.

The electronic device 100 may determine whether the infrared lighting 111 is closed to an occupant based on intensity values of the first to third proximity frames pf₁, pf₂, and pf₃. In an embodiment of the present disclosure, the processor 120 (see FIG. 4) of the electronic device 100 may compare each of the pixel intensity values of the first to third proximity frames pf₁, pf₂, and pf₃ with a preset threshold, and determine that the occupant is close to the infrared lighting 111 in a case where each of the pixel intensity values of the first to third proximity frames pf₁, pf₂, and pf₃ exceeds the threshold as a result of the comparison. Referring to the embodiment shown in FIG. 10, the intensity value of the first proximity frame pf₁ may be lower than the threshold, and the intensity values of the second proximity frame pf₂ and the third proximity frame pf₃ may exceed the threshold. The processor 120 may compare the intensity value of the second proximity frame pf₂ with the threshold, determine that the intensity value of the second proximity frame pf₂ exceeds the threshold as a result of the comparison, and determine that the occupant has moved closely to the infrared lighting 111.

In a case where it is determined that the occupant is in a location close to the infrared lighting 111, the processor 120 of the electronic device 100 may control the PMIC 115 (see FIG. 5) of a camera to decrease a current value of the power applied to the infrared lighting 111. Referring to the timing chart 1000 shown in FIG. 10, in a case where it is determined that the intensity value of the second proximity frame pf₂ exceeds the threshold, the processor 120 may reduce the outputs of the fifth infrared light I₅ and the sixth infrared light I₆ by decreasing the current value applied to the infrared lighting 111. For example, the processor 120 may irradiate the fifth infrared light I₅ and the sixth infrared light I₆ by limiting the current value applied to the infrared lighting 111 to 40 %. Accordingly, the intensity values of the fifth infrared light I₅ and the sixth infrared light I₆ obtained by the image sensor 112 may be lower than the intensity values of the first image frame i₁ to the fourth image frame i₄.

In a case where the intensity value of the third proximity frame pf₃ obtained through a manual exposure is greater than the intensity value of the second proximity frame pf₂, the processor 120 may determine that the occupant is closer to the infrared lighting 111. In this case, the processor 120 may irradiate the seventh infrared light I₇ and the eighth infrared light I₈ by further decreasing the current value applied to the infrared lighting 111 after the third proximity frame pf₃ is obtained. For example, the processor 120 may reduce the outputs of the seventh infrared light I₇ and the eighth infrared light I₈ to 20 % compared to the output of the first infrared light I₁ by limiting the current value applied to the infrared lighting 111 to 20 %. In this case, the intensity value of the seventh image frame i₇ obtained by the image sensor 112 after the seventh infrared light I₇ is irradiated may be lower than the intensity values of the fifth image frame i₅ and the sixth image frame i₆.

FIG. 11 is the timing chart 1100 illustrating an operation, performed by the electronic device 100, of obtaining an image frame by controlling the image sensor 112 and controlling the brightness of the infrared lighting 111 based on the obtained image frame, according to an embodiment of the present disclosure.

The timing chart 1100 shown in FIG. 11 is the same as the timing chart 800 shown in FIG. 8 except that exposure times of the fifth to seventh infrared light I₅ to I₇ irradiated to respectively obtain the fifth to seventh image frames i₅ to i₇ are short, and thus the redundant descriptions of the plurality of image frames i₁ to i₇, the first to third proximity frames pf₁, pf₂, and pf₃, a preset frame rate, etc. are omitted.

The electronic device 100 may determine whether the infrared lighting 111 is closed to an occupant based on intensity values of the first to third proximity frames pf₁, pf₂, and pf₃. In an embodiment of the present disclosure, the processor 120 (see FIG. 4) of the electronic device 100 may compare each of the pixel intensity values of the first to third proximity frames pf₁, pf₂, and pf₃ with a preset threshold, and determine that the occupant is close to the infrared lighting 111 in a case where each of the pixel intensity values of the first to third proximity frames pf₁, pf₂, and pf₃ exceeds the threshold as a result of the comparison. Referring to the embodiment shown in FIG. 11, the intensity value of the first proximity frame pf₁ may be lower than the threshold, and the intensity values of the second proximity frame pf₂ and the third proximity frame pf₃ may exceed the threshold. The processor 120 may compare the intensity value of the second proximity frame pf₂ with the threshold, determine that the intensity value of the second proximity frame pf₂ exceeds the threshold as a result of the comparison, and determine that the occupant has moved closely to the infrared lighting 111.

In a case where it is determined that the occupant is in a location close to the infrared lighting 111, the processor 120 of the electronic device 100 may reduce the exposure time of infrared light by controlling the infrared lighting 111. Referring to the timing chart 1100 shown in FIG. 11, in a case where it is determined that the intensity value of the second proximity frame pf₂ exceeds the threshold, the processor 120 may control the infrared lighting 111 to reduce the exposure times of the fifth infrared light I₅ and the sixth infrared light I₆. For example, the processor 120 may control the infrared lighting 111 to limit each of the exposure times of the fifth infrared light I₅ and the sixth infrared light I₆ to within 1 ms. Accordingly, outputs of the fifth infrared light I₅ and the sixth infrared light I₆ may be reduced, and the intensity values of the fifth image frame is and the sixth image frame is obtained by the image sensor 112 may be lower than the intensity values of the first image frame i₁ to the fourth image frame i₄.

In a case where the intensity value of the third proximity frame pf₃ obtained through a manual exposure is greater than the intensity value of the second proximity frame pf₂, the processor 120 may determine that the occupant is closer to the infrared lighting 111. In this case, the processor 120 may further reduce the exposure time of the seventh infrared light I₇ irradiated by the infrared lighting 111 after the third proximity frame pf₃ is obtained. For example, the processor 120 may limit the exposure time of the seventh infrared light I₇ irradiated by the infrared lighting 111 to 0.5 ms. In this case, the output of the seventh infrared light I₇ may be further reduced, and the intensity value of the seventh image frame i₇ obtained by the image sensor 112 may be lower than the intensity values of the fifth image frame is and the sixth image frame i₆.

In the embodiments shown in FIGS. 8 to 11, the electronic device 100 may determine whether the occupant is close to the infrared lighting 111 based on the intensity values of the first to third proximity frames pf₁, pf₂, and pf₃, and, in a case where it is determined that the occupant is close to the infrared lighting 111, reduce the brightness of the infrared lighting 111 by turning off the infrared lighting 111 (see FIG. 8), reducing the on time signal ratio of the infrared lighting 111 (see FIG. 9), limiting the current value of the power applied to the infrared lighting 111 (see FIG. 10), limiting an exposure time of light by the infrared lighting 111 (see FIG. 11), etc. Accordingly, the electronic device 100 according to an embodiment of the present disclosure may prevent the occupant's eye health from deteriorating due to excessive irradiation of infrared light to an occupant in a vehicle by an OMS.

FIG. 12A is a cross-sectional view illustrating an arrangement of a plurality of infrared lightings 111-1 and 111-2 and the image sensor 112 in a vehicle according to an embodiment of the present disclosure.

Referring to FIG. 12A, the camera 110 may be disposed in the vehicle 10, and include the plurality of infrared lightings 111-1 and 111-2 and the image sensor 112. The plurality of infrared lightings 111-1 and 111-2 are configured to emit light in an infrared band and irradiate the infrared light to occupants of the vehicle 10, such as a driver and/or a passenger on the first row seats 12 and the second row seats 14. In the embodiment shown in FIG. 12A, the plurality of infrared lightings 111-1 and 111-2 may be installed in an indoor lamp or cluster inside the vehicle 10, but are not limited thereto. The first row lighting 111-1 may irradiate the infrared light to the occupant of the first row seats 12, and the second row lighting 111-2 may irradiate the infrared light to the occupant of the second row seats 14.

The plurality of infrared lightings 111-1 and 111-2 are the same as the infrared lighting 111 described with reference to FIGS. 1 to 11, except that the plurality of infrared lightings 111-1 and 111-2 include two or more infrared lighting, and thus redundant descriptions thereof are omitted.

The first row lighting 111-1 and the second row lighting 111-2 may include respectively plurality of first row lighting and plurality of second row lighting. This will be described with reference to FIG. 12B.

FIG. 12B is a diagram illustrating an arrangement of a plurality of infrared lightings 111-1L, 111-1R, 111-2L, 111-2R and the image sensor 112 in a vehicle according to an embodiment of the present disclosure.

Referring to FIG. 12B, the first row lighting 111-1 may include the first row left lighting 111-1L and the first row right lighting 111-1R, and the second row lighting 111-2 may include the second row left lighting 111-2L and the second row right lighting 111-2R. The first row left lighting 111-1L may irradiate infrared light to a driver on a driver seat 12-1 of the first row seats 12 (see FIG. 12A), and the first row right lighting 111-1R may irradiate infrared light to an occupant on a right passenger seat 12-2 of the first row seats 12. However, the present disclosure is not limited thereto, and in a vehicle of some countries (e.g., Japan, the United Kingdom, etc.) where a driver seat is located on the right, the first row right lighting 111-1R may irradiate infrared light to a driver in the driver seat, and the first row left lighting 111-1L may irradiate infrared light to an occupant in a left passenger seat of the first row seats 12. The second row left lighting 111-2L may irradiate infrared light to an occupant on a second row left seat 14-1 of the second row seats 14 (see FIG. 1A), and the second row right lighting 111-2R may irradiate infrared light to an occupant on a second row right seat 14-2 of the second row seats 14.

In the embodiment shown in FIG. 12B, the first row lighting 111-1 and the second row lighting 111-2 each include two lighting, but this is exemplary and the present disclosure is not limited as shown in FIG. 12B. In an embodiment of the present disclosure, the first row lighting 111-1 and the second row lighting 111-2 may each include three or more lighting.

Referring to FIGS. 12A and 12B together, the camera 110 is configured to obtain an image by photographing the occupant in at least one of the first row seats 12 or the second row seats 14. In an embodiment of the present disclosure, the electronic device 100 mounted in the vehicle 10 may be configured as an OMS that analyzes an image obtained through the camera 110 by using a pre-trained Al model to recognize an occupant's face, such as the driver or the passenger, or recognize a behavior (e.g., drowsiness, sleeping, conversation, mobile device manipulation, etc.) of the occupant. In an embodiment shown in FIG. 12A, a first distance d₁ between the image sensor 112 of the camera 110 and the first row seats 12 may be less than a second distance d₂ between the image sensor 112 and the second row seats 14. Even though the first row lighting 111-1 irradiates the infrared light to the occupant of the first row seats 12, and the second row lighting 111-2 irradiates the infrared light to the occupant of the second row seats 14, because the first distance d₁ between the image sensor 112 of the camera 110 and the first row seats 12 and the second distance d₂ between the image sensor 112 and the second row seats 14 are different, the brightness of the first row seats 12 and the second row seats 14 may be significantly different from each other according to an attenuation ratio for each distance. In addition to the distance difference, the brightness difference between the first row seats 12 and the second row seats 14 may occur due to a physical environment difference such as an irradiation angle and transmittance by the first row lighting 111-1 and the second row lighting 111-2.

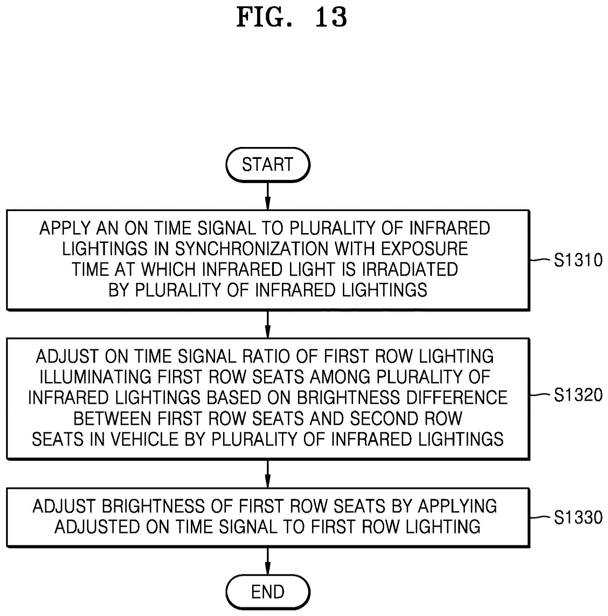

FIG. 13 is a flowchart illustrating a method, performed by the electronic device 100, of controlling a plurality of infrared lightings mounted in a vehicle according to an embodiment of the present disclosure.

In operation S1310, the electronic device 100 applies an on time signal to the plurality of infrared lightings in synchronization with an exposure time at which infrared light is irradiated by the plurality of infrared lightings. The electronic device 100 may apply the on time signal to the first row lighting 111-1 (see FIGS. 12A and 12B) and the second row lighting 111-2 (see FIGS. 12A and 12B) so that light sources of the first row lighting 111-1 and the second row lighting 111-2 emit light and irradiate infrared light to the first row seats 12 (see FIG. 1A) and the second row seats 14 (see FIG. 1A) only during an exposure time of a camera.

In operation S1320, the electronic device 100 adjusts an on time signal ratio of the first row lighting 111-1 illuminating the first row seats 12 among the plurality of infrared lightings 111-1 and 111-2 based on a brightness difference between the first row seats 12 and the second row seats 14 in the vehicle by the plurality of infrared lightings 111-1 and 111-2. The electronic device 100 may measure the brightness of the first row seats 12 and the second row seats 14. A method, performed by the electronic device 100, of measuring the brightness is a known technology, and thus a detailed description thereof will be omitted. The electronic device 100 may adjust the on time signal ratio of the first row lighting 111-1 to be different from an on time signal ratio of the second row lighting 111-2 based on the brightness difference between the first row seats 12 and the second row seats 14. In an embodiment of the present disclosure, the electronic device 100 may adjust the on time signal ratio of the first row lighting 111-1 by applying a delay time within a time period synchronized with an exposure time of an image sensor of the camera. In an embodiment of the present disclosure, the electronic device 100 may adjust the on time signal ratio of the first row lighting 111-1 by adjusting a pulse duty for controlling the light emission of the first row lighting 111-1 through PWM. In an embodiment of the present disclosure, the electronic device 100 may adjust the on time signal ratio of the first row lighting 111-1 by applying the delay time within the time period synchronized with the exposure time of the camera and adjusting the pulse duty for controlling the light emission of the first row lighting 111-1 to which the delay time is applied through PWM.

In operation S1330, the electronic device 100 adjusts the brightness of the first row seats 12 by applying the adjusted on time signal to the first row lighting 111-1. In an embodiment of the present disclosure, the electronic device 100 may adjust the brightness of the first row seats 12 to be the same as the brightness of the second row seats 14.

In an OMS, the camera irradiates an occupant with light in an infrared band by using infrared lighting and uses the light as lighting. The lighting in the infrared band has the advantage of being invisible to the human eyes, but has low atmospheric propagation efficiency. In addition, due to the characteristics of short-range active lighting, because an attenuation rate for each distance is high, and a brightness difference may be remarkably large even with a small distance difference. As a result, in a case where the lighting in the infrared band is installed in each of the first row seats 12-1 and 12-2 and the second row seats 14-1 and 14-2 in the vehicle 10, the brightness difference due to a distance difference is large. In addition to the distance difference, a greater brightness difference may occur due to physical environmental differences such as an irradiation angle and transmittance by a plurality of lighting. Due to the brightness difference between the first row seats 12-1 and 12-2 and the second row seats 14-1 and 14-2, a specific region of an image obtained through the camera 110 is photographed at an appropriate brightness, but the remaining region is a saturated or low-illumination image that is not suitable for image analysis, which causes a problem in that the accuracy of occupant recognition is poor. In addition, in a case where a brightness difference for each seat occurs due to an external environment, such as the condition of external light (e.g., natural light), even with lighting adjusted for each seat, an image of appropriate brightness for monitoring an occupant may not be obtained.

An embodiment of the present disclosure provides the electronic device 100 controlling the brightness of the plurality of infrared lightings 111-1 and 111-2 in the vehicle 10 to correct the brightness difference between the first row seats 12-1 and 12-2 and the second row seats 14-1 and 14-2 according to locations of the plurality of infrared lightings 111-1 and 111-2 in the OMS including the plurality of infrared lightings 111-1 and 111-2 and an operation method of the electronic device 100.

The electronic device 100 according to an embodiment of the present disclosure controls the brightness of the first row lighting 111-1 in a software manner, such as applying a delay time to the light emission timing of the first row lighting 111-1 irradiating infrared light to the first row seats 12-1 and 12-2 or adjusting a pulse duty through PWM, thereby equally adjusting the brightness of the first row seats 12-1 and 12-2 and the second row seats 14-1 and 14-2. Therefore, the electronic device of the present disclosure may obtain an image with an appropriate brightness regardless of a structure of the vehicle 10 and locations of the plurality of infrared lightings 111-1 and 111-2, thereby providing the technical effect of improving the accuracy of occupant monitoring. In addition, the electronic device of the present disclosure adjusts the brightness of the first row lighting 111-1 based on software, thereby flexibly adjusting the brightness in real time and obtaining an image with the minimal influence from a change in an external light source such as sunlight.

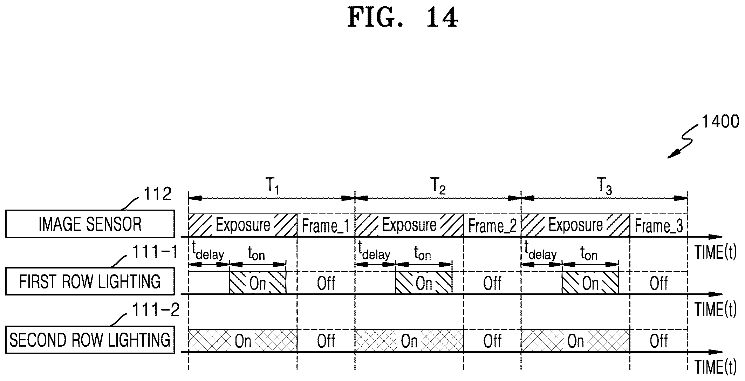

FIG. 14 is a timing chart 1400 illustrating an operation, performed by the electronic device 100, of adjusting an on time signal ratio of the first row lighting 111-1 according to an embodiment of the present disclosure.

Referring to the timing chart 1400 shown in FIG. 14, an image sensor included in the camera 110 may receive light reflected from a subject for a preset exposure time within time periods T₁, T₂, T₃, ... and obtain an image frame. The processor 120 (see FIG. 4) of the electronic device 100 may apply an on time signal to the first row lighting 111-1 and the second row lighting 111-2 so that light sources of the first row lighting 111-1 and the second row lighting 111-2 operate to emit infrared light in synchronization with the exposure time of the camera 110. Referring to the timing chart 1400, in response to the on time signal synchronized with the exposure time of the camera 110 being applied to the second row lighting 111-2, the second row lighting 111-2 may emit light during the exposure time of the camera 110 so that the infrared light may be irradiate to the second row seats 14 (see FIG. 12A), and the second row lighting 111-2 may be turned off during the time when the image frame is obtained so that no infrared light may be irradiated.

The processor 120 may also apply the on time signal to the first row lighting 111-1 in synchronization with the exposure time of the camera 110. The processor 120 may apply the on time signal to the first row lighting 111-1 by applying a delay time t_{delay} within the time periods T₁, T₂, T₃, ... synchronized with the exposure time of the camera 110. In an embodiment of the present disclosure, the processor 120 may determine the delay time t_{delay} based on a brightness difference between the first row seats 12 (see FIG. 12A) and the second row seats 14. For example, the processor 120 may adjust the delay time in proportion to a difference between the brightness of the first row seats 12 and the brightness of the second row seats 14. That is, the darker the brightness of the second row seats 14 is compared to the brightness of the first row seats 12, the longer the delay time t_{delay} applied to the on time signal applied to the first row lighting 111-1 may be adjusted. However, the present disclosure is not limited thereto, and the processor 120 may determine the delay time t_{delay} based on a first distance between the camera 110 and the first row lighting 111-1 and a second distance between the camera 110 and the second row lighting 111-2.

Referring to the timing chart 1400, because the delay time t_{delay} is applied, the on time signal may be applied to the first row lighting 111-1 after the delay time t_{delay}. In an embodiment of the present disclosure, a time tₒₙ at which the on time signal is applied to the first row lighting 111-1 may be shorter than the exposure time of the camera 110 within the time periods T₁, T₂, T₃, ... That is, the on time signal applied to the first row lighting 111-1 during the time periods T₁, T₂, T₃, ..., ends earlier than the time at which the exposure time of the camera 110 ends, and the first row lighting 111-1 may be switched to an off state.

Because the delay time t_{delay} is applied to the first row lighting 111-1, a ratio of the on time signal applied to the first row lighting 111-1, i.e., the on time signal ratio, may be adjusted to be lower than the on time signal ratio of the second row lighting 111-2 during the time periods T₁, T₂, T₃, ... The processor 120 may adjust the brightness of the first row seats 12 to be the same as the brightness of the second row seats 14 by adjusting the on time signal ratio of the first row lighting 111-1 to a low level.

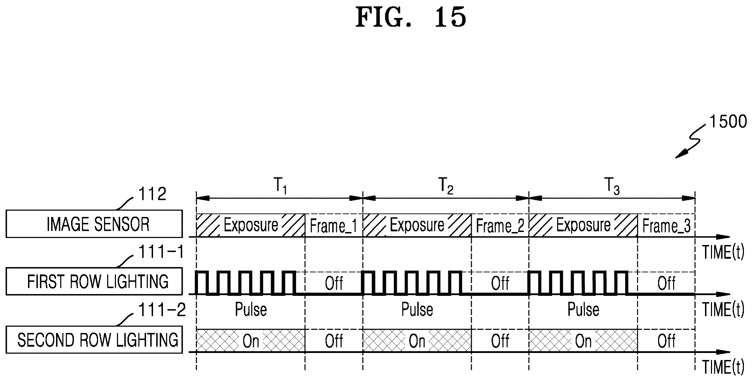

FIG. 15 is a timing chart 1500 illustrating an operation, performed by the electronic device 100, of adjusting an on time signal ratio of the first row lighting 111-1 according to an embodiment of the present disclosure.

The timing chart 1500 of FIG. 15 is the same as the timing chart 1400 of FIG. 14 except for an on time signal applied to the first row lighting 111-1, and thus redundant descriptions related to an exposure time of the image sensor 112 of a camera and the on time signal of the second row lighting 111-2 are omitted.

Referring to the timing chart 1500 shown in FIG. 15, the processor 120 (see FIG. 4) of the electronic device 100 may adjust a pulse duty for controlling the light emission of the first row lighting 111-1 through PWM. In an embodiment of the present disclosure, the processor 120 may emit the first row lighting 111-1 to apply the on time signal for irradiating infrared light to the first row seats 12 (see FIG. 12A) in a pulse waveform having a constant pulse width. In an embodiment of the present disclosure, the pulse duty by which the on time signal is applied to the first row lighting 111-1 may be determined based on a brightness difference between the first row seats 12 and the second row seats 14 (see FIG. 12A). For example, the processor 120 may determine the pulse duty in inverse proportion to the difference between the brightness of the first row seats 12 and the brightness of the second row seats 14. That is, the darker the brightness of the second row seats 14 compared to the brightness of the first row seats 12, the shorter the pulse duty of the on time signal applied to the first row lighting 111-1. However, the present disclosure is not limited thereto, and the processor 120 may determine the pulse duty based on a first distance between the image sensor 112 of the camera and the first row lighting 111-1 and a second distance between the image sensor 112 and the second row lighting 111-2.

Referring to the timing chart 1500, because the on time signal is applied to the first row lighting 111-1 in the pulse waveform, the on time signal ratio of the first row lighting 111-1 may be lower than the on time signal ratio of the second row lighting 111-2. The processor 120 may adjust the brightness of the first row seats 12 to be the same as the brightness of the second row seats 14 by adjusting the on time signal ratio of the first row lighting 111-1 to a low level.

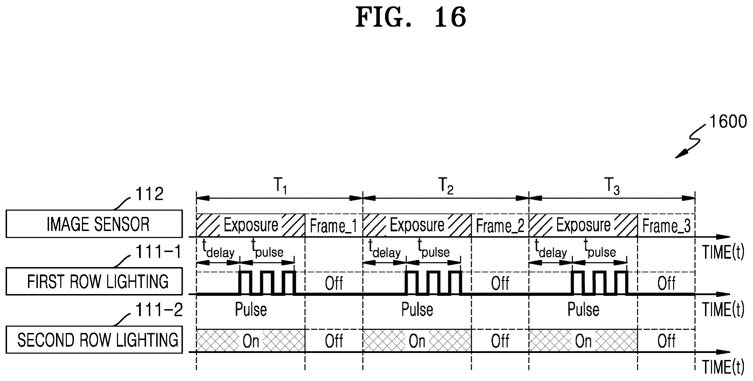

FIG. 16 is a timing chart 1600 illustrating an operation, performed by the electronic device 100, of adjusting an on time signal ratio of the first row lighting 111-1 according to an embodiment of the present disclosure.

The timing chart 1600 of FIG. 16 is the same as the timing chart 1400 of FIG. 14 except for an on time signal applied to the first row lighting 111-1, and thus redundant descriptions related to an exposure time of the image sensor 112 of a camera and the on time signal of the second row lighting 111-2 are omitted.

Referring to the timing chart 1600 shown in FIG. 16, the processor 120 (see FIG. 4) of the electronic device 100 may apply the delay time t_{delay} to the on time signal applied to the first row lighting 111-1 within the time periods T₁, T₂, T₃, ... synchronized with the exposure time of the image sensor 112, and apply the on time signal in a pulse waveform to the first row lighting 111-1. In an embodiment of the present disclosure, the processor 120 may adjust a pulse duty of the on time signal applied to the first row lighting 111-1 through PWM. In an embodiment of the present disclosure, the processor 120 may determine the delay time t_{delay} applied to the first row lighting 111-1 based on a brightness difference between the first row seats 12 and the second row seats 14. In an embodiment of the present disclosure, the processor 120 may determine the pulse duty of the on time signal applied to the first row lighting 111-1 based on the brightness difference between the first row seats 12 and the second row seats 14.

Referring to the timing chart 1600, the on time signal in the pulse waveform applied to the first row lighting 111-1 may end earlier than a time at which the exposure time by the image sensor 112 ends. That is, a sum of the delay time t_{delay} applied to the first row lighting 111-1 and a time tₚᵤₗₛₑ at which the on time signal in the pulse waveform is applied may be shorter than the exposure time of the image sensor 112. However, the present disclosure is not limited thereto, and the on time signal in the pulse waveform applied to the first row lighting 111-1 may be stopped at the same time as the exposure time of the image sensor 112 ends.

Because the delay time t_{delay} and the on time signal in the pulse waveform are applied to the first row lighting 111-1, the on time signal ratio of the first row lighting 111-1 may be adjusted to be lower than the on time signal ratio of the second row lighting 111-2 during the time periods T₁, T₂, T₃, ... The processor 120 may adjust the brightness of the first row seats 12 to be the same as the brightness of the second row seats 14 by adjusting the on time signal ratio of the first row lighting 111-1 to a low level.

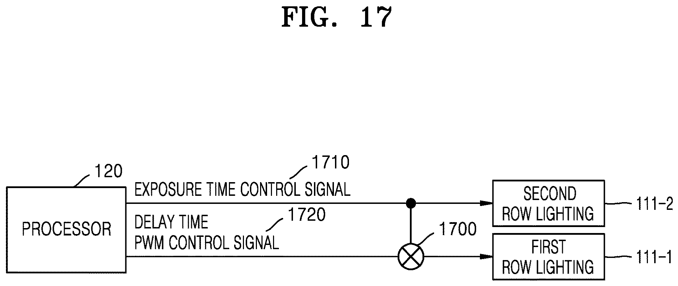

FIG. 17 is a diagram illustrating an AND gate 1700 for the electronic device 100 to adjust an on time signal ratio of the first row lighting 111-1 according to an embodiment of the present disclosure.

Referring to FIG. 17, the processor 120 may control the operation of the second row lighting 111-2 by applying an exposure time control signal 1710 synchronized with the exposure time by the image sensor 112 of the camera 110 (see FIGS. 4, 5, 12A, and 12B) to the second row lighting 111-2. The processor 120 may include the AND gate 1700, and may perform an operation of applying a delay time or multiplying a delay time/PWM control signal 1720 for controlling PWM with the exposure time control signal 1710 through the AND gate 1700. The processor 120 may output a signal for controlling the on time signal ratio of the first row lighting 111-1 through an AND operation. The processor 120 may adjust the brightness of the first row lighting 111-1 by applying the output signal to the first row lighting 111-1.

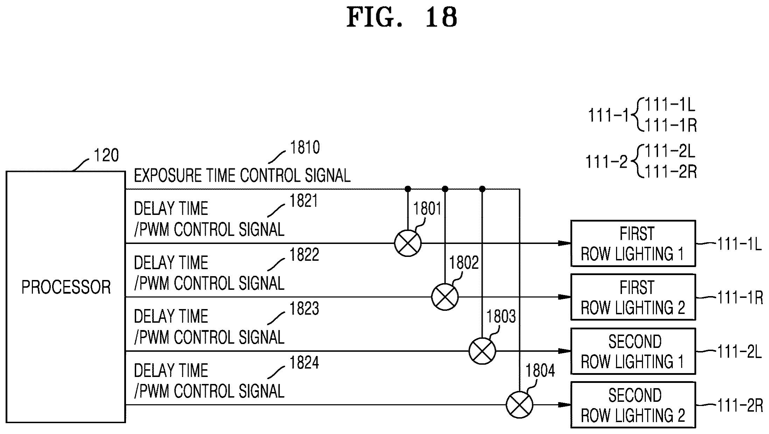

FIG. 18 is a diagram illustrating AND gates 1801 to 1804 for the electronic device 100 to adjust an on time signal ratio of the plurality of infrared lightings 111-1L, 111-1R, 111-2L, 111-2R according to an embodiment of the present disclosure.

Referring to FIG. 18, the first row lighting 111-1 and the second row lighting 111-2 may include respectively plurality of first row lighting and plurality of second row lighting. The first row lighting 111-1 may include the first row left lighting 111-1L and the first row right lighting 111-1R. The second row lighting 111-2 may include the second row left lighting 111-2L and the second row right lighting 111-2R. The processor 120 may control operations of the first row left lighting 111-1L, the first row right lighting 111-1R, the second row left lighting 111-2L, and the second row right lighting 111-2R by applying an exposure time control signal 1810 synchronized with an exposure time by the image sensor 112 of the camera 110 (see FIGS. 4, 5, 12A, and 12B) to each of the first row left lighting 111-1L, the first row right lighting 111-1R, the second row left lighting 111-2L, and the second row right lighting 111-2R.

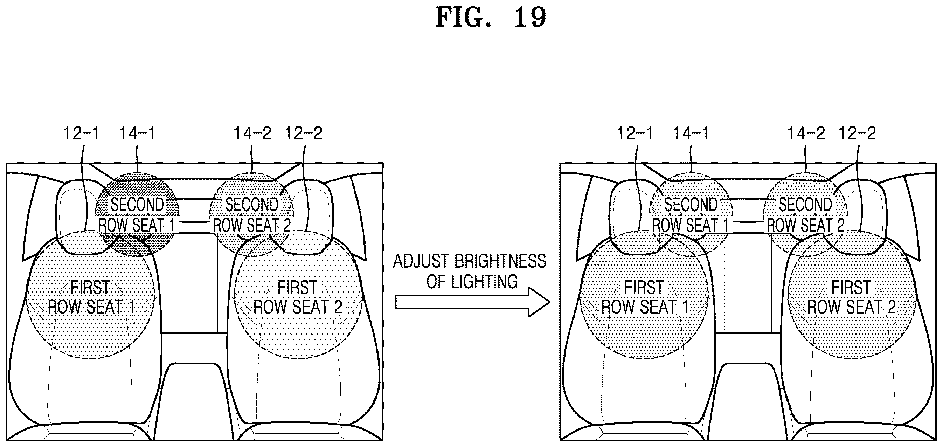

In an embodiment of the present disclosure, the processor 120 may include the plurality of AND gates 1801 to 1804, and may perform an operation of applying a delay time or multiplying delay time/PWM control signals 1821 to 1824 for controlling PWM with the exposure time control signal 1810 through the plurality of AND gates 1801 to 1804. The processor 120 may output a signal for controlling the on time signal ratio of the plurality of infrared lightings 111-1L, 111-1R, 111-2L, 111-2R through an AND operation through the plurality of AND operation gates 1810 to 1804. The processor 120 may adjust the brightness of the plurality of first row seats 12-1 and 12-2 (see FIG. 19) and the brightness of the plurality of second row seats 14-1 and 14-2 (see FIG. 12B) by applying the output signal to each of the plurality of lighting 111-1L, 111-1R, 111-2R, 111-2L, and 111-2R.

FIG. 19 is a diagram for explaining an operation, performed by the electronic device 100, of adjusting a brightness difference between the plurality of seats 12-1, 12-2, 14-1, 14-2 in a vehicle by controlling the brightness of a plurality of infrared lightings according to an embodiment of the present disclosure.

Referring to FIG. 19, the plurality of first row seats 12-1 and 12-2 and the plurality of second row seats 14-1 and 14-2 of the vehicle 10 may be configured. In the embodiment shown in FIG. 19, the first row seats 12-1 and 12-2 may include the driver seat 12-1 and the passenger seat 12-2, and the second row seats 14-1 and 14-2 may include the second row seat 1 14-1 and the second row seat 2 14-2. The brightness of the driver seat 12-1 and the brightness of the passenger seat 12-2 may be different from each other, and the brightness of the second row seat 1 14-1 and the brightness of the second row seat 2 14-2 may be different from each other. For example, the brightness of the second row seat 1 14-1 may be brighter than the brightness of the second row seat 2 14-2. For example, the brightness of the driver seat 12-1 and the passenger seat 12-2 may be brighter than the brightness of the second row seat 1 14-1.

Referring to FIGS. 18 and 19, the processor 120 (see FIG. 18) may measure the brightness of the plurality of first row seats 12-1 and 12-2 and adjust delay time/PWM control signals 1821 and 1822 based on a brightness difference between the plurality of first row seats 12-1 and 12-2. The processor 120 may adjust the brightness of the first row left lighting 111-1L and the first row right lighting 111-1R by performing an AND operation of multiplying the adjusted delay time/PWM control signals 1821 and 1822 with the exposure time control signal 1810. Because the brightness of the first row left lighting 111-1L and the first row right lighting 111-1R are adjusted, the brightness of the driver seat 12-1 and the passenger seat 12-2 may be adjusted equally. Likewise, the processor 120 may measure the brightness of the plurality of second row seats 14-1 and 14-2 and adjust delay time/PWM control signals 1823 and 1824 based on a brightness difference between the plurality of second row seats 14-1 and 14-2. The processor 120 may adjust the brightness of the second row left lighting 111-2L and the second row right lighting 111-2R by performing an AND operation of multiplying the adjusted delay time/PWM control signals 1823 and 1824 with the exposure time control signal 1810. Because the brightness of the second row left lighting 111-2L and the second row right lighting 111-2R are adjusted, the brightness of the second row seat 1 14-1 and the second row seat 2 14-2 may be adjusted equally.

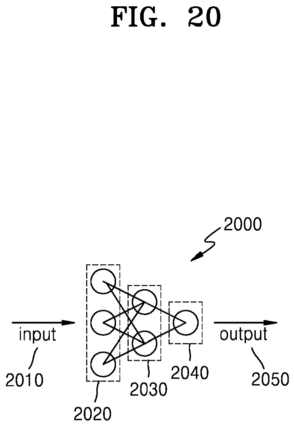

FIG. 20 is a diagram for explaining an operation performed by the electronic device100 by using Al technology, according to the present disclosure.

Specifically, at least one of i) obtaining a proximity frame according to a preset frame rate between a plurality of image frames obtained according to a preset frame rate through the camera 110 (see FIGS. 4 and 5), ii) determining whether the infrared lighting 111 of the camera 110 is close to an occupant in a vehicle based on a pixel intensity value of the obtained proximity frame, or iii) adjusting the brightness of the infrared lighting 111 based on a result of determining whether the infrared lighting 111 is close to the occupant may be performed by the electronic device 100 by using the Al technology for performing arithmetic operations through a neural network.

At least one of i) applying an on time signal by which the plurality of infrared lightings 111-1 and 111-2 emit light to the plurality of infrared lightings 111-1 and 111-2 in synchronization with an exposure time of the camera 110 (see FIGS. 4, 5, 12A, and 12B), ii) adjusting an on time signal ratio of the first row lighting 111-1 illuminating the first row seats 12 among the plurality of infrared lightings 111-1 and 111-2 to be different from an on time signal ratio of the second row lighting 111-2 illuminating the second row seats 14, based on a brightness difference between the first row seats 12 (see FIG. 12A) and the second row seats 14 (see FIG. 12A) in the vehicle by the plurality of infrared lightings 111-1 and 111-2, or iii) adjusting the brightness of the first row seats 12 by applying the on time signal with the adjusted ratio to the first row lighting 111-1 may be performed by the electronic device 100 by using the Al technology for performing arithmetic operations through the neural network.

The Al technology is for obtaining an intended result by performing processing, such as analysis and/or classification, on input data based on arithmetic operations through the neural network.

The Al technology may be implemented by using an algorithm. Here, the algorithm or a set of algorithms for implementing the Al technology is referred to as the neural network. Here, the neural network may receive an input of input data, perform arithmetic operations for analysis and/or classification, and output resulting data. In order for the neural network to accurately output resulting data corresponding to input data, it is necessary to train the neural network. Here, 'training' may refer to training the neural network to discover or learn by itself a method of analyzing pieces of input data to the neural network, a method of classifying the pieces of input data, and/or a method of extracting features required for generating resultant data from the pieces of input data. Specifically, through a training process, the neural network may be trained based on training data (e.g., a plurality of different images) so as to optimize and set weight values in the neural network. Then, the neural network having the optimized weight values may output an intended result by processing input data.

A neural network including a plurality of hidden layers which are internal layers for performing arithmetic operations, i.e., the depth of which for performing computations increases, may be classified as a deep neural network. Examples of the neural network include a convolutional neural network (CNN), a recurrent neural network (RNN), a restricted Boltzmann machine (RBM), a deep belief network (DBN), a bidirectional recurrent deep neural network (BRDNN), and a deep Q-network (DQN), but are not limited thereto. In addition, the neural network may be subdivided. For example, the CNN may be subdivided into a deep CNN (DCNN), a capsule neural network (CapsNet) (not shown), etc.

The 'AI model' may refer to a neural network including at least one layer configured to receive input data and output a desired result. In addition, the 'AI model' may also refer to an algorithm or a set of a plurality of algorithms for outputting an intended result by performing arithmetic operations through the neural network, a processor for executing the algorithm (or the set of algorithms), software for executing the algorithm (or the set of algorithms), or hardware for executing the algorithm (or the set of algorithms).

At least one of i) obtaining a proximity frame according to a preset frame rate between a plurality of image frames obtained according to a preset frame rate through the camera 110, ii) determining whether the infrared lighting 111 of the camera 110 is close to an occupant in a vehicle based on a pixel intensity value of the obtained proximity frame, or iii) adjusting the brightness of the infrared lighting 111 based on a result of determining whether the infrared lighting 111 is close to the occupant, which are described above, may be performed based on an Al model.

In addition, at least one of i i) applying an on time signal by which the plurality of infrared lightings 111-1 and 111-2 emit light to the plurality of infrared lightings 111-1 and 111-2 in synchronization with an exposure time of the camera 110, ii) adjusting an on time signal ratio of the first row lighting 111-1 illuminating the first row seats 12 among the plurality of infrared lightings 111-1 and 111-2 to be different from an on time signal ratio of the second row lighting 111-2 illuminating the second row seats 14, based on a brightness difference between the first row seats 12 and the second row seats 14 in the vehicle by the plurality of infrared lightings 111-1 and 111-2, or iii) adjusting the brightness of the first row seats 12 by applying the on time signal with the adjusted ratio to the first row lighting 111-1, which are described above, may be performed based on the Al model.

Referring to FIG. 20, a neural network 2000 may be trained by receiving an input of training data. Subsequently, the trained neural network 2000 may receive input data 2010 via an input stage 2020, and the input stage 2020, a hidden layer 2030, and an output stage 2040 may analyze the input data 2010 and data transferred from previous layers to perform arithmetic operations for outputting output data 2050. FIG. 20 illustrates the hidden layer 2030 as a single layer, but this is merely an example, and the hidden layer 2030 may include a plurality of layers.

In the disclosed embodiment, the neural network 2000 may be trained to compare an intensity value of a proximity frame with a preset threshold, and determine that an occupant in a vehicle is close to the infrared lighting 111 in a case where the intensity value of the proximity frame exceeds the threshold as a result of the comparison.

In the disclosed embodiment, the neural network 2000 may be trained to turn off power applied to the infrared lighting 111 in a case where it is determined that the occupant in the vehicle is close to the infrared lighting 111.

In the disclosed embodiment, the neural network 2000 may be trained to adjust an on time signal ratio of the infrared lighting 111 by adjusting a pulse duty for controlling light emission of the infrared lighting 111 through PWM in a case where it is determined that the occupant in the vehicle is close to the infrared lighting 111.

In the disclosed embodiment, the neural network 2000 may be trained to adjust the brightness of the infrared lighting 111 by controlling a current value of the power applied to the infrared lighting 111 in a case where it is determined that the occupant in the vehicle is close to the infrared lighting 111.

In the disclosed embodiment, the neural network 2000 may be trained to adjust the brightness of the infrared lighting 111 by controlling an exposure time of the infrared lighting 111 in a case where it is determined that the occupant in the vehicle is close to the infrared lighting 111.

In the disclosed embodiment, the neural network 2000 may be trained to adjust an on time signal ratio of the first row lighting 111-1 by applying a delay time within a time period synchronized with an exposure time of a camera.

In the disclosed embodiment, the neural network 2000 may be trained to adjust the on time signal ratio of the first row lighting 111-1 by adjusting a pulse duty for controlling the light emission of the first row lighting 111-1 through PWM.

In the disclosed embodiment, the neural network 2000 may adjust the on time signal ratio of the first row lighting 111-1 by applying the delay time within the time period synchronized with the exposure time of the camera 110 and adjusting the pulse duty for controlling the light emission of the first row lighting 111-1 to which the delay time is applied through PWM.

In the disclosed embodiment, data or program code associated with the neural network 2000 for performing at least one of i) obtaining a proximity frame according to a preset frame rate between a plurality of image frames obtained according to frames per second through the camera 110, ii) determining whether the infrared lighting 111 of the camera 110 is close to an occupant in a vehicle based on a pixel intensity value of the obtained proximity frame, or iii) adjusting the brightness of the infrared lighting 111 based on a result of determining whether the infrared lighting 111 is close to the occupant, which are described above, may be stored in the memory 130 (see FIG. 4), and training of the neural network 2000 may be performed by the processor 120 (see FIG. 4). In this case, the processor 120 may include an Al processor such as an NPU.

In the disclosed embodiment, data or program code associated with the neural network 2000 for performing at least one of i) applying an on time signal by which the plurality of infrared lightings 111-1 and 111-2 emit light to the plurality of infrared lightings 111-1 and 111-2 in synchronization with an exposure time of the camera 110, ii) adjusting an on time signal ratio of the first row lighting 111-1 illuminating the first row seats 12 among the plurality of infrared lightings 111-1 and 111-2 to be different from an on time signal ratio of the second row lighting 111-2 illuminating the second row seats 14, based on a brightness difference between the first row seats 12 and the second row seats 14 in the vehicle by the plurality of infrared lightings 111-1 and 111-2, or iii) adjusting the brightness of the first row seats 12 by applying the on time signal with the adjusted ratio to the first row lighting 111-1, which are described above, may be stored in the memory 130, and training of the neural network 2000 may be performed by the processor 120.

However, the disclosure is not limited thereto, and the neural network 2000 configured to perform at least one of i) obtaining a proximity frame according to a preset frame rate between a plurality of image frames obtained according to a preset frame rate through the camera 110, ii) determining whether the infrared lighting 111 of the camera 110 is close to an occupant in a vehicle based on a pixel intensity value of the obtained proximity frame, or iii) adjusting the brightness of the infrared lighting 111 based on a result of determining whether the infrared lighting 111 is close to the occupant, which are described above, may be implemented within a separate device (not shown) or processor (not shown) distinct from the electronic device 100.

In addition, the neural network 2000 configured to perform at least one of i) applying an on time signal by which the plurality of infrared lightings 111-1 and 111-2 emit light to the plurality of infrared lightings 111-1 and 111-2 in synchronization with an exposure time of the camera 110, ii) adjusting an on time signal ratio of the first row lighting 111-1 illuminating the first row seats 12 among the plurality of infrared lightings 111-1 and 111-2 to be different from an on time signal ratio of the second row lighting 111-2 illuminating the second row seats 14, based on a brightness difference between the first row seats 12 and the second row seats 14 in the vehicle by the plurality of infrared lightings 111-1 and 111-2, or iii) adjusting the brightness of the first row seats 12 by applying the on time signal with the adjusted ratio to the first row lighting 111-1, which are described above, may be implemented within a separate device (not shown) or processor (not shown) distinct from the electronic device 100.

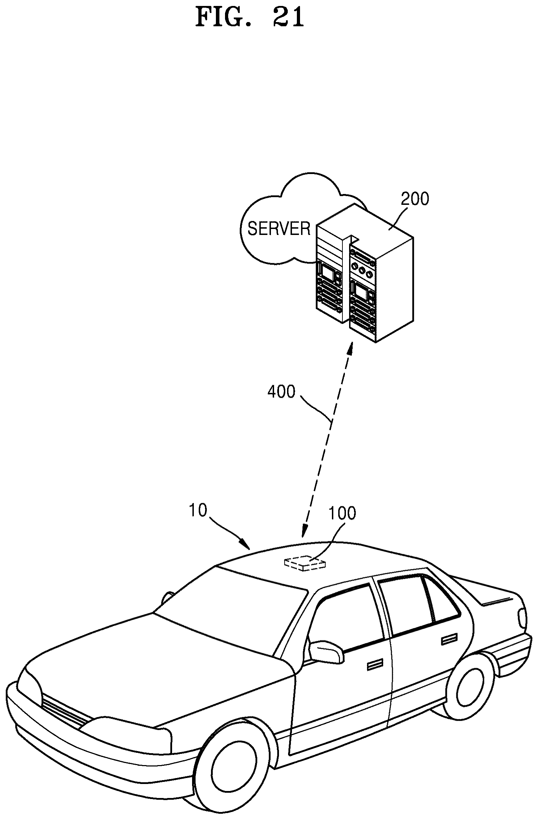

The arithmetic operations through the neural network 2000 described above may be performed by a server 200 (see FIGS. 21 and 22) capable of communicating with the electronic device 100 according to an embodiment, through a wireless communication network. Communication between the electronic device 100 and the server 200 will be described with reference to FIGS. 21 and 22.

FIG. 21 is a diagram illustrating an embodiment in which the electronic device 100 operates in conjunction with the server 200, according to the present disclosure.

In an embodiment shown in FIG. 21, the electronic device 100 may include the camera 110, the processor 120, and the memory 130. In an embodiment of the present disclosure, the electronic device 100 may further include the communication interface 140 (see FIG. 21). The camera 110, the processor 120, and the memory 130 shown in FIG. 21 are respectively the same as the camera 110 (see FIG. 4), the processor 120 (see FIG. 4), and the memory 130 (see FIG. 4), and thus redundant descriptions thereof are omitted.

The server 200 may transmit and receive data to and from the electronic device 100 through a communication network 400, and process data.

Referring further to FIG. 22, the server 200 may include a communication interface 210 configured to communicate with the electronic device 100, a processor 220 configured to execute one or more instructions, and a database 230.

The server 200 may train an Al model and store the trained Al model. In addition, by using the trained Al model, the server 200 may perform at least one of i) obtaining a proximity frame according to a preset frame rate between a plurality of image frames, ii) determining whether the infrared lighting 111 of the camera 110 is close to an occupant in a vehicle based on a pixel intensity value of the obtained proximity frame, or iii) adjusting the brightness of the infrared lighting 111 based on a result of determining whether the infrared lighting 111 is close to the occupant, which are described above. In an embodiment of the present disclosure, the server 200 may perform at least one of i) applying an on time signal by which the plurality of infrared lightings 111-1 and 111-2 emit light to the plurality of infrared lightings 111-1 and 111-2 in synchronization with an exposure time of the camera 110, ii) adjusting an on time signal ratio of the first row lighting 111-1 illuminating the first row seats 12 among the plurality of infrared lightings 111-1 and 111-2 to be different from an on time signal ratio of the second row lighting 111-2 illuminating the second row seats 14, based on a brightness difference between the first row seats 12 and the second row seats 14 in the vehicle by the plurality of infrared lightings 111-1 and 111-2, or iii) adjusting the brightness of the first row seats 12 by applying the on time signal with the adjusted ratio to the first row lighting 111-1.

In general, the electronic device 100 may have limitations compared to the server 200 in the storage capacity of the memory 130 (see FIG. 4), the arithmetic operation processing speed of the processor 120 (see FIG. 4), the ability to collect training datasets, etc. Thus, operations requiring the storage of large-capacity data and significant computational load may be performed on the server 200, after which necessary data and/or Al model may be transmitted to the electronic device 100 through the communication network. Accordingly, the electronic device 100 may quickly and easily perform necessary operations even without a large-capacity memory and a processor with high-speed arithmetic operation capabilities, by receiving and using the necessary data and/or the Al model through the server 200.

In the disclosed embodiment, the server 200 may include the neural network 2000 described above with reference to FIG. 20.

FIG. 22 is a diagram for specifically explaining FIG. 21.

Referring to FIG. 22, the server 200 may include the communication interface 210, the processor 220, and the database 230.

The communication interface 210 performs communication with an external device through a wireless communication network. Here, the external device (not shown) may include a server capable of performing at least one of arithmetic operations required by the electronic device 100, or transmitting data required by the electronic device 100.

The communication interface 210 includes at least one communication module such as a short-range communication module, a wired communication module, a mobile communication module, or a broadcast receiving module. Here, the at least one communication module refers to a communication module capable of performing transmission and reception of data through a tuner performing broadcast reception, or a network conforming to a communication specification such as Bluetooth, Wi-Fi, wireless broadband (Wibro), Worldwide Interoperability for Microwave Access (Wimax), code-division multiple access (CDMA), wideband code-division multiple access (WCDMA), Internet, 3G, 4G, 5G, and/or communication schemes using millimeter waves (mmWave).

The mobile communication module included in the communication interface 210 may perform communication with another device located remotely (e.g., the electronic device 100) through the communication network conforming to communication standards such as 3G, 4G (LTE), and/or 5G. Here, the communication module configured to perform communication with another device located remotely may be referred to as a 'long-range communication module'. In an embodiment of the present disclosure, the electronic device 100 may further include a communication interface 140, and the communication interface 210 of the server 200 may transmit and receive data to and from the communication interface 140 of the electronic device 100 by wired or wirelessly.

The processor 220 controls the overall operation of the server 200. For example, the processor 220 may perform required operations by executing one or more instructions or programs of the server 200.

The database 230 may include memory (not shown) and may store, in the memory (not shown), at least one of one or more instructions, programs, or data necessary for the server 200 to perform certain operations. In addition, the database 230 may store data necessary for the server 200 to perform arithmetic operations according to a neural network.

In the disclosed embodiment, the server 200 may store the neural network 2000 described above with reference to FIG. 20. The neural network 2000 may be stored in at least one of the processor 220 or the database 230. The neural network 2000 included in the server 200 may be a completely trained neural network.

In addition, the server 200 may transmit the trained neural network 2000 (see FIG. 20) to the communication interface 140 of the electronic device 100 through the communication interface 210. The electronic device 100 may obtain and store the completely trained neural network 2000, and obtain desired output data through the neural network 2000.

The present disclosure provides a method, performed by the electronic device 100, of controlling the brightness of infrared lighting in a vehicle. In an embodiment of the present disclosure, the operation method of the electronic device 100 may include obtaining a proximity frame according to a preset frame rate between a plurality of image frames obtained according to frames per second through the camera 110. The operation method of the electronic device 100 may include determining whether infrared lighting of the camera 110 is close to an occupant in the vehicle based on a pixel intensity value of the obtained proximity frame. The operation method of the electronic device 100 may include adjusting the brightness of the infrared lighting 111 based on a result of determining whether the infrared lighting 111 is close to the occupant.

In an embodiment of the present disclosure, the preset frame rate may represent a rate of one proximity frame to the number of a plurality of image frames obtained during one time period in which a preset number of image frames and one proximity frame are obtained.

In an embodiment of the present disclosure, an exposure time of infrared light irradiated to the occupant by the infrared lighting 111 may be fixed at a preset time so as to obtain the proximity frame.

In an embodiment of the present disclosure, a pixel intensity value of the proximity frame may be obtained based on a signal level of an ADC output obtained by converting an analog signal of light obtained by the image sensor 112 of the camera 110 into a digital signal.

In an embodiment of the present disclosure, the determining of whether the infrared lighting 111 is close to the occupant may include comparing the pixel intensity value of the obtained proximity frame with a preset threshold, and determining that the occupant is close to the infrared lighting 111 as a result of the comparing, in a case where the pixel intensity value of the proximity frame exceeds the threshold.

In an embodiment of the present disclosure, the adjusting of the brightness of the infrared lighting 111 may include turning off power applied to the infrared lighting 111 in a case where it is determined that the occupant is close to the infrared lighting 111.

In an embodiment of the present disclosure, the adjusting of the brightness of the infrared lighting 111 may include adjusting an on time signal ratio of the infrared lighting by adjusting a pulse duty for controlling light emission of the infrared lighting 111 through PWM in a case where it is determined that the occupant is close to the infrared lighting 111.

In an embodiment of the present disclosure, the adjusting of the brightness of the infrared lighting 111 may include adjusting the brightness of the infrared lighting 111 by controlling a current value of power applied to the infrared lighting 111 in a case where it is determined that the occupant is close to the infrared lighting 111.

In an embodiment of the present disclosure, the adjusting of the brightness of the infrared lighting 111 may include adjusting the brightness of the infrared lighting 111 by controlling an exposure time of the infrared lighting 111 in a case where it is determined that the occupant is close to the infrared lighting 111.

In an embodiment of the present disclosure, the image sensor 112 of the camera 110 may include a plurality of light receiving sensors, and the plurality of light receiving sensors may be divided into a plurality of regions according to locations thereof. The determining that the infrared lighting 111 is close to the occupant may include obtaining intensity value information of the proximity frame for each region by receiving the light reflected from the occupant by using the plurality of light receiving sensors respectively included in each of the plurality of divided regions, and determining whether the occupant is close to the infrared lighting 111 by applying a weight value allocated for each region to the obtained intensity value information for each region.

The present disclosure provides the electronic device 100 controlling the brightness of lighting based on whether an occupant in the vehicle 10 is close to the lighting. The electronic device 100 according to an embodiment of the present disclosure may include the camera 110 including the infrared lighting 111 configured to irradiate infrared light to the occupant in the vehicle 10 and the image sensor 112 configured to obtain an image by receiving light reflected from the occupant, the memory 130 storing one or more instructions, and the at least one processor 120 configured to execute the one or more instructions. The image sensor 112 may obtain a plurality of image frames according to frames per second, and obtain a proximity frame according to a preset frame rate between times in a case where the plurality of image frames are obtained. The at least one processor 120 may obtain pixel intensity information of the proximity frame, and determine whether the camera 110 is close to the occupant in the vehicle 10 based on the obtained pixel intensity information of the proximity frame. The at least one processor 120 may adjust the brightness of the infrared lighting 111 based on a result of determining whether the camera 110 is close to the occupant.

In an embodiment of the present disclosure, the preset frame rate may represent a rate of one proximity frame to the number of a plurality of image frames obtained during one time period in which a preset number of image frames and one proximity frame are obtained.

In an embodiment of the present disclosure, an exposure time of infrared light irradiated to the occupant by the infrared lighting 111 may be fixed at a preset time so as to obtain the proximity frame.

In an embodiment of the present disclosure, the at least one processor 120 may obtain the pixel intensity value of the proximity frame based on a signal level of an ADC output obtained by converting an analog signal of light obtained by the image sensor 112 into a digital signal.

In an embodiment of the present disclosure, the at least one processor 120 may compare the pixel intensity value of the obtained proximity frame with a preset threshold, and determine that the occupant is close to the infrared lighting 111 as a result of the comparing, in a case where the pixel intensity value of the proximity frame exceeds the threshold.

In an embodiment of the present disclosure, the at least one processor 120 may turn off power applied to the infrared lighting 111 in a case where it is determined that the occupant is close to the infrared lighting 111.

In an embodiment of the present disclosure, the at least one processor 120 may adjust an on time signal ratio of the infrared lighting 111 by performing PWM and adjusting a pulse duty for controlling light emission of the infrared lighting 111 in a case where it is determined that the occupant is close to the infrared lighting 111.

In an embodiment of the present disclosure, the at least one processor 120 may adjust the brightness of the infrared lighting 111 by controlling a current value of power applied to the infrared lighting 111 in a case where it is determined that the occupant is close to the infrared lighting 111.

In an embodiment of the present disclosure, the at least one processor 120 may adjust the brightness of the infrared lighting 111 by controlling an exposure time of the infrared lighting 111 in a case where it is determined that the occupant is close to the infrared lighting 111.

In an embodiment of the present disclosure, the image sensor 112 may include the plurality of light receiving sensors 700-1 to 700-n, the plurality of light receiving sensors 700-1 to 700-n may be divided into a plurality of regions according to locations thereof. The at least one processor 120 may obtain intensity value information of the proximity frame for each region by receiving the light reflected from the occupant by using the plurality of light receiving sensors 700-1 to 700-n respectively included in the plurality of divided regions. The at least one processor 120 may determine whether the occupant is close to the infrared lighting 111 by applying a weight value allocated for each region to the obtained intensity value information for each region.

The present disclosure provides an operation method of the electronic device 100 controlling the plurality of infrared lightings 111-1 and 111-2 included in the vehicle 10. The operation method of the electronic device 100 according to an embodiment of the present disclosure may include applying an on time signal by which the plurality of infrared lightings 111-1 and 111-2 emit light to the plurality of infrared lightings 111-1 and 111-2 in synchronization with an exposure time of the camera 110. The operation method of the electronic device 100 may include adjusting an on time signal ratio of the first row lighting 111-1 illuminating first row seats among the plurality of infrared lightings 111-1 and 111-2 to be different from an on time signal ratio of the second row lighting 111-2 illuminating second row seats, based on a brightness difference between the first row seats and the second row seats in the vehicle 10 by the plurality of infrared lightings 111-1 and 111-2. The method may include adjusting the brightness of the first row seats by applying the on time signal with the adjusted ratio to the first row lighting 111-1.

In an embodiment of the present disclosure, in the adjusting of the on time signal ratio of the first row lighting 111-1, the electronic device 100 may adjust the on time signal ratio of the first row lighting 111-1 by applying a delay time within a time period synchronized with an exposure time of the image sensor 112 of the camera 110.

In an embodiment of the present disclosure, in the adjusting of the on time signal ratio of the first row lighting 111-1, the electronic device 100 may adjust the on time signal ratio of the first row lighting 111-1 by adjusting a pulse duty for controlling the light emission of the first row lighting 111-1 through PWM.

In an embodiment of the present disclosure, in the adjusting of the on time signal ratio of the first row lighting 111-1, the electronic device 100 may adjust the on time signal ratio of the first row lighting 111-1 by applying the delay time within the time period synchronized with the exposure time of the image sensor 112 of the camera 110 and adjusting the pulse duty for controlling the light emission of the first row lighting 111-1 to which the delay time is applied through PWM.

In an embodiment of the present disclosure, the first row lighting 111-1 may include plurality of first row lighting. In the adjusting of the on time signal ratio of the first row lighting 111-1, the electronic device 100 may differently adjust an on time signal ratio of each of the plurality of first row lighting 111-1 based on a brightness difference of a plurality of first row seats respectively by the plurality of first row lighting 111-1

In an embodiment of the present disclosure, the second row lighting 111-2 may include plurality of second row lighting. The method may further include differently adjusting an on time signal ratio of each of the plurality of second row lighting based on a brightness difference of a plurality of second row seats respectively by the plurality of second row lighting.

The present disclosure provides the electronic device 100 controlling the brightness of infrared lighting of the camera 110 included in the vehicle 10. The electronic device 100 according to an embodiment of the present disclosure may include the camera 110 including the plurality of infrared lightings 111-1 and 111-2 configured to irradiate infrared light to an occupant in the vehicle 10 and the image sensor 112 configured to obtain an image by receiving light reflected from the occupant, the memory 130 storing one or more instructions, and the at least one processor 120 configured to execute the one or more instructions. The plurality of infrared lightings 111-1 and 111-2 may include the first row lighting 111-1 irradiating infrared light to first row seats in the vehicle 10 and the second row lighting 111-2 irradiating the infrared light to second row seats in the vehicle 10. The at least one processor 120 may apply an on time signal by which the plurality of infrared lightings 111-1 and 111-2 emit light to the plurality of infrared lightings 111-1 and 111-2 in synchronization with an exposure time of the image sensor 112. The at least one processor 120 may adjust an on time signal ratio of the first row lighting 111-1 to be different from an on time signal ratio of the second row lighting 111-2, based on a brightness difference between the first row seats and the second row seats in the vehicle 10 by the plurality of infrared lightings 111-1 and 111-2. The at least one processor 120 may adjust the brightness of the first row seats by applying the on time signal with the adjusted ratio to the first row lighting 111-1.

In an embodiment of the present disclosure, the at least one processor 120 may adjust the on time signal ratio of the first row lighting 111-1 by applying a delay time within a time period synchronized with then exposure time of the image sensor 112.

In an embodiment of the present disclosure, the at least one processor 120 may adjust the on time signal ratio of the first row lighting 111-1 by adjusting a pulse duty for controlling the light emission of the first row lighting 111-1 through PWM.

In an embodiment of the present disclosure, the at least one processor 120 may adjust the on time signal ratio of the first row lighting 111-1 by applying the delay time within the time period synchronized with the exposure time of the image sensor 112 and adjusting the pulse duty for controlling the light emission of the first row lighting 111-1 to which the delay time is applied through PWM.

In an embodiment of the present disclosure, the first row lighting 111-1 may include plurality of first row lighting. The at least one processor 120 may differently adjust an on time signal ratio of each of the plurality of first row lighting 111-1 based on a brightness difference of a plurality of first row seats respectively by the plurality of first row lighting 111-1.

In an embodiment of the present disclosure, the second row lighting 111-2 may include plurality of second row lighting. The at least one processor 120 may differently adjust an on time signal ratio of each of the plurality of second row lighting based on a brightness difference of a plurality of second row seats respectively by the plurality of second row lighting.

A program executable by the electronic device 100 described herein may be implemented as a hardware component, a software component, and/or a combination of hardware components and software components. The program is executable by any system capable of executing computer-readable instructions.

The software may include a computer program, code, instructions, or a combination of one or more thereof, and may configure the processor to operate as desired or may independently or collectively instruct the processor.

The software may be implemented as a computer program that includes instructions stored in computer-readable storage media. The computer-readable storage media may include, for example, magnetic storage media (e.g., ROM, RAM, floppy disks, or hard disks) and optical storage media (e.g., a compact disc ROM (CD-ROM) or a digital versatile disc (DVD)). The computer-readable recording medium may be distributed in computer systems connected via a network and may store and execute computer-readable code in a distributed manner. The medium is readable by a computer, stored in memory, and executable by a processor.

The computer-readable storage medium may be provided in the form of a non-transitory storage medium. Here, the term 'non-transitory' merely means that the storage medium is a tangible device, and does not include a signal, but this term does not differentiate between where data is semi-permanently stored in the storage medium and where the data is temporarily stored in the storage medium. For example, the non-transitory storage medium may include a buffer in which data is temporarily stored.

In addition, a program according to embodiments disclosed herein may be provided in a computer program product. The computer program product may be traded as commodities between sellers and buyers.

The computer program product may include a software program and a computer-readable recording medium storing the software program. For example, the computer program product may include a product (e.g., a downloadable application) in the form of a software program electronically distributed through a manufacturer of the electronic device or an electronic market (e.g., Samsung Galaxy Store^{™} or Google Play Store^{™}). For electronic distribution, at least part of the software program may be stored in a storage medium or temporarily generated. In this case, the storage medium may be a storage medium of a server of the manufacturer of the vehicle 10, a server of the manufacturer of the electronic device 100, a server of the electronic market, or a relay server that temporarily stores the software program.

The computer program product may include a storage medium of the server 200 or a storage medium of another electronic device, in a system including the electronic device 100, the server 200 (see FIGS. 21 and 22), and other electronic devices. Alternatively, in a case where there is a third device (e.g., a mobile device such as a smart phone) communicating with the electronic device 100, the computer program product may include a storage medium of the third device. Alternatively, the computer program product may include a software program, which is transmitted from the electronic device 100 to the third device or transmitted from the third device to the electronic device 100.

In this case, one of the electronic device 100, another electronic device, or the third device (e.g., a mobile device such as a smart phone) may execute the computer program product to perform the method according to the disclosed embodiments. Alternatively, two or more of the electronic device 100, the other electronic device, and the third device may execute the computer program product to execute the method according to the disclosed embodiments in a distributed manner.

For example, the electronic device 100 may execute the computer program product stored in the memory 130 (see FIG. 4) to control another electronic device communicatively connected to the electronic device 100 to perform the method according to the disclosed embodiments.

As another example, the third device may execute the computer program product to control an electronic device communicatively connected to the third device to perform the method according to the disclosed embodiments.

In a case where the third device executes the computer program product, the third device may download the computer program product from the electronic device 100 and execute the downloaded computer program product. Alternatively, the third device may execute the computer program product provided in a pre-loaded state to perform the method according to the disclosed embodiments.

Although the embodiments have been described with the limited embodiments and the drawings, various modifications and changes may be made by those of skill in the art from the above description. For example, suitable results may be obtained even when the described techniques are performed in a different order, or when components in a described electronic device, architecture, device, or circuit are coupled or combined in a different manner, or replaced or supplemented by other components or their equivalents.

## Claims

1. A method, performed by an electronic device (100), of controlling brightness of infrared lighting in a vehicle, the method comprising:
obtaining a proximity frame according to a preset frame rate between a plurality of image frames obtained according to frames per second through a camera (110);
determining whether infrared lighting (111) of the camera (110) is close to an occupant in the vehicle based on a pixel intensity value of the obtained proximity frame; and
adjusting the brightness of the infrared lighting (111) based on a result of determining whether the infrared lighting (111) is close to the occupant.

2. The method of claim 1, wherein
an exposure time of infrared light irradiated to the occupant by the infrared lighting (111) is fixed at a preset time so as to obtain the proximity frame.

3. The method of claim 1 or 2, wherein
the determining of whether infrared lighting (111) of the camera (110) is close to the occupant includes
comparing the pixel intensity value of the obtained proximity frame with a preset threshold; and
determining that the occupant is close to the infrared lighting (111) as a result of the comparing, in a case where the pixel intensity value of the proximity frame exceeds the threshold.

4. The method of any one of claims 1 to 3, wherein
the adjusting of the brightness of the infrared lighting (111) includes
turning off power applied to the infrared lighting (111) in a case where it is determined that the occupant is close to the infrared lighting (111).

5. The method of any one of claims 1 to 3, wherein
the adjusting of the brightness of the infrared lighting (111) includes
adjusting an on time signal ratio of the infrared lighting (111) by adjusting a pulse duty for controlling light emission of the infrared lighting (111) through pulse width modulation (PWM) in a case where it is determined that the occupant is close to the infrared lighting (111).

6. The method of any one of claims 1 to 3, wherein
the adjusting of the brightness of the infrared lighting (111) includes
adjusting the brightness of the infrared lighting (111) by controlling a current value of power applied to the infrared lighting (111) in a case where it is determined that the occupant is close to the infrared lighting (111).

7. The method of any one of claims 1 to 3, wherein
the adjusting of the brightness of the infrared lighting (111) includes
adjusting the brightness of the infrared lighting (111) by controlling an exposure time of the infrared lighting (111) in a case where it is determined that the occupant is close to the infrared lighting (111).

8. An electronic device (100) controlling brightness of lighting based on whether an occupant in a vehicle (10) is close to the lighting, the electronic device (100) comprising:
a camera (110) comprising infrared lighting (111) configured to irradiate infrared light to the occupant in the vehicle (10) and an image sensor (112) configured to obtain an image by receiving light reflected from the occupant;
memory (130) storing one or more instructions; and
at least one processor (120) configured to execute the one or more instructions,
wherein the image sensor (112) is configured to
obtain a plurality of image frames according to frames per second, and obtain a proximity frame according to a preset frame rate between times when the plurality of image frames are obtained, and
the at least one processor (120) is configured to
obtain pixel intensity information of the proximity frame, and determine whether the camera (110) is close to the occupant in the vehicle (10) based on the obtained pixel intensity information of the proximity frame, and
adjust the brightness of the infrared lighting (111) based on a result of determining whether the camera (110) is close to the occupant.

9. The electronic device (100) of claim 8, wherein
an exposure time of infrared light irradiated to the occupant by the infrared lighting (111) is fixed at a preset time so as to obtain the proximity frame.

10. The electronic device (100) of claim 8 or 9, wherein
the at least one processor (120) is configured to
compare a intensity value of the obtained proximity frame with a preset threshold; and
determine that the occupant is close to the infrared lighting (111) as a result of the comparing, in a case where the intensity value of the proximity frame exceeds the threshold.

11. The electronic device (100) of any one of claims 8 to 10, wherein
the at least one processor (120) is configured to
turn off power applied to the infrared lighting (111) in a case where it is determined that the occupant is close to the infrared lighting (111).

12. The electronic device (100) of any one of claims 8 to 10, wherein
the at least one processor (120) is configured to
adjust an on time signal ratio of the infrared lighting (111) by performing pulse width modulation (PWM) and adjusting a pulse duty for controlling light emission of the infrared lighting (111) in a case where it is determined that the occupant is close to the infrared lighting (111).

13. The electronic device (100) of any one of claims 8 to 10, wherein
the at least one processor (120) is configured to
adjust the brightness of the infrared lighting (111) by controlling a current value of power applied to the infrared lighting (111) in a case where it is determined that the occupant is close to the infrared lighting (111).

14. The electronic device (100) of any one of claims 8 to 10, wherein
the at least one processor (120) is configured to
adjust the brightness of the infrared lighting (111) by controlling an exposure time of the infrared lighting (111) in a case where it is determined that the occupant is close to the infrared lighting (111).

15. The electronic device (100) of any one of claims 8 to 14, wherein
the image sensor (112) includes a plurality of light receiving sensors (700-1 to 700-n),
the plurality of light receiving sensors (700-1 to 700-n) are divided into a plurality of regions according to locations thereof, and
the at least one processor (120) is configured to
obtain intensity value information of the proximity frame for each region by receiving the light reflected from the occupant by using the plurality of light receiving sensors (700-1 to 700-n) respectively included in the plurality of divided regions, and
determine whether the occupant is close to the infrared lighting (111) by applying a weight value allocated for each region to the obtained intensity value information for each region.
